# EUROPÄISCHE PATENTSCHRIFT

(11) **EP 4 437 020 B1**
(45) Veröffentlichungstag und Bekanntmachung des Hinweises auf die Patenterteilung: **02.07.2025**
(21) Anmeldenummer: 22813473.0
(22) Anmeldetag: 02.11.2022
(51) Int. Cl.: C08F 285/00, C08F 2/00, C08F 2/22, C08F 2/26, C08F 255/02

(54) **MEHRSTUFEN-COPOLYMERE ALS BINDEMITTEL FÜR BESCHICHTUNGSMITTEL**
MULTI-STAGE COPOLYMERS AS BINDER FOR COATING AGENTS
COPOLYMÈRES À PLUSIEURS ÉTAPES EN TANT QUE LIANT POUR AGENTS DE REVÊTEMENT

(43) Veröffentlichungstag der Anmeldung: 02.10.2024
(73) Patentinhaber: Wacker Chemie AG, 81671 München (DE)
(72) Erfinder: WEITZEL, Hans-Peter, 81737 München (DE); BAUEREGGER, Stefan, 81737 München (DE)
(74) Vertreter: Ege, Markus
(86) Internationale Anmeldenummer: PCT/EP2022/080481
(87) Internationale Veröffentlichungsnummer: WO 2024/094292

(56) Entgegenhaltungen:
- EP-A1- 1 308 468
- EP-A1- 2 017 313
- EP-A2- 1 153 979
- WO-A2-2004/065441

## Beschreibung

Die Erfindung betrifft Mehrstufen-Copolymere von Vinylacetat und (Meth)Acrylsäureestern oder Vinylaromaten in Form von wässrigen Dispersionen, Verfahren zu deren Herstellung und deren Verwendung beispielsweise als Bindemittel für wässrige Beschichtungsmittel, insbesondere mit hohem pH-Wert, beispielsweise für Dispersionsfarben oder Putze.

Herkömmliche wässrige Beschichtungsmittel, wie Dispersionsfarben oder -putze, mit Vinylacetat-Copolymeren als Bindemittel werden üblicherweise durch Zugabe von Bioziden, wie Isothiazolinonen, als Topfkonservierungsmittel vor Biokontamination geschützt, um so das Wachstum von Mikroorganismen zu unterbinden und die Lagerstabilität zu gewährleisten. Solche Bioziden stehen jedoch bereits seit einiger Zeit unter einem verstärkten regulatorischen Druck, so dass aus dem Markt zunehmend konservierungsmittelfreie wässrige Beschichtungsmittel nachgefragt werden. Bei einem Ansatz hierfür wird die Topfkonservierung durch Einstellen der wässrigen Beschichtungsmittel auf hohe pH-Werte erreicht, beispielsweise auf pH-Werte von 10 bis 11,5, so dass das Wachstum von Mikroorganismen verhindert, die Lagerstabilität erreicht und deswegen auf Konservierungsmittel verzichtet werden kann.

Für Konservierungsmittel-freie Beschichtungsmittel mit hohen pH-Werten sind als Bindemittel beispielsweise Styrol-AcrylatCopolymere oder Poly(meth)acrylate gängig. Solche Copolymere erreichen jedoch nicht das Pigmentbindevermögen von Vinylacetat-Copolymeren. Herkömmliche Vinylacetat-Copolymere sind jedoch bei pH-Werten von beispielsweise 10 bis 11,5 nicht stabil, weswegen sich solche Vinylacetat-Copolymere für Beschichtungsmittel mit hohen pH-Werten nicht qualifizieren. Denn solche Bindemittel auf Basis von Vinylacetat hydrolysieren in alkalischen Formulierungen, wodurch der pH-Wert des alkalischen Beschichtungsmittels gesenkt wird, so dass das Beschichtungsmittels im Laufe der Zeit nicht mehr ausreichend vor Biokontamination geschützt ist. Deswegen besteht der Bedarf, lagerstabile wässrige Beschichtungsmittel mit hohen pH-Werten bereitzustellen, die Vinylacetat-Copolymere als Bindemittel enthalten.

Konservierungsmittelfreie Dispersionsfarben mit hohen pH-Werten und reinen Acrylat- oder Styrolacrylat-Copolymeren als Bindemittel sind vielfach beschrieben. So beschreibt beispielsweise die WO2002000798 entsprechende Dispersionsfarben mit Styrolacrylatdispersionen als Bindemittel für konservierungsmittelfreie hoch-pH-Farben, insbesondere für den Innenbereich, mit Wasserglas als Additiv. Die konservierungsmittelfreien hoch-pH-Dispersionsfarben der US10988627 und DE102014 013455 enthalten als Bindemittel konkret Acrylat- oder Styrolacrylat-Copolymere sowie als Additiv Alkalimetallalkylsilikonat beziehungsweise allgemein Siliconate zur Stabilisierung der Dispersionsfarben, insbesondere des pH-Wertes. Weitere Biozid-freie hoch-pH Dispersionsfarben mit (Styrol)Acrylatcopo-lymeren sind beispielsweise in DE202017106112, DE202018101199, offenbart. Die EP3974479 erwähnt konservierungsmittelfreie Beschichtungsmittel mit hohem pH-Wert, die Hybridbindemittel aus Siliciumdioxid und (Meth)Acrylatpolymeren und gegebenenfalls weiteren Polymeren enthalten. Auch die DE102017008984 befasst sich mit lagerstabilen Beschichtungsmitteln. US2021269653 AA beschreibt entsprechende Dispersionsfarben enthaltend Emulsionspolymerisate auf Basis von Ethylhexylacrylat, Butylacrylat und Vinylaromaten.

Die US2021002506 AA beschreibt die Herstellung von Styrolacrylatcopolymeren mittels mehrstufiger Emulsionspolymerisation, wobei in sämtlichen Polymerisationsstufen Styrol und Acrylate als Hauptmonomere eingesetzt werden, sowie den Einsatz dieser Mehrstufenpolymerisate in biozidfreien Glanz- und Halbglanzbeschichtungszusammensetzungen, die mittels wasserlöslichem Alkalimetall- oder Erdalkalimetallalkylsilikonat auf einen pH-Wert von mindestens 10 eingestellt sind.

Aus einzelnen Schriften sind auch hoch-pH-Dispersionsfarben mit Vinylacetat-Copolymeren bekannt. So empfiehlt die US778 9959 als Bindemittel für konservierungsmittelfreie Dispersionsfarben oder- lacke Copolymere von Vinylestern kurzkettiger Carbonsäuren (C₁-C₄ Kohlenstoffatome), Vinylestern langkettiger Carbonsäuren (C₅-C₁₈ Kohlenstoffatome) sowie Olefinen. Die US 10899918 beschreibt wasserbeständige Copolymere umfassend eine erste Polymerphase basierend auf Vinylestern, gegebenenfalls eine intermediäre Polymerphase und eine zweite Polymerphase auf Basis von (Meth)Acrylsäureestern und/oder Styrol, wobei die intermediäre Polymerphase zwischen der Hydrophilie und Hydrophobie vermittelt und die zweite Polymerphase konkret Säuremonomereinheiten enthält.

Die US9902785 empfiehlt zur Verbesserung der mechanischen oder brandhemmenden Eigenschaften sowie zur Verringerung der Verschmutzungsneigung oder der Wasseraufnahme von Mörteln oder Farbbeschichtungen den Zusatz eines zweistufigen Copolymerisats erhältlich durch Copolymerisieren von Vinylestern und Ethylen in der ersten Stufe sowie (Meth)Acrylsäureestern in der zweiten Stufe, wobei in der ersten und/oder zweiten Stufen optional beliebige weitere Monomere eingesetzt werden können, wie beispielsweise Epoxy-, Silicium-, Carbonsäure-, Sulfonsäure-, Phosphonsäure-, Hydroxy- oder N-Methylol-funktionelle Monomere oder auch mehrfach ethylenisch ungesättigte Monomere. Analoges beschreibt die US8993668, um Beschichtungen mit verbesserter Zugfestigkeit auszustatten. Zur Reduzierung der Wasseraufnahme von Farben oder Mörtel lehrt die US2021230315 Mehrstufencopolymerisate mit durchschnittlichen Partikeldurchmessern von < 200 nm und pH-Werten von 2,5 bis 8 hergestellt mittels mehrstufiger Emulsionspolymerisation von 1) Vinylacetat und langkettigen Vinylestern und 2) (Meth)Acrylsäureestern oder Vinylaromaten und Säuremonomeren. Säuremonomere in der zweiten Stufe sind hierbei also essentiell.

Die Dokumente EP-A1-1308468, WO-A2-2004/065441, EP-A1-2017313 und EP-A2-1153979 beschreiben Mehrstufencopolymere basierend auf Vinylacetat, Ethylen, siliciumfunktionellen Monomeren und (Meth)acrylaten im Allgemeinen, aber nicht alle Details der verschiedenen Polymerisationsstufen.

Vor diesem Hintergrund bestand die Aufgabe, Vinylacetat-Copolymere in Form von wässrigen Dispersionen bereitzustellen, die bei Einsatz in Dispersionsfarben mit pH-Werten von 10 bis 11,5 Farben mit hoher pH-Stabilität und zudem hohem Pigmentbindevermögen ergeben und darüber hinaus nach Applikation zu Farbbeschichtungen mit vorteilhaften Nassabriebsfestigkeiten und hoher Deckkraft führen.

Ein Gegenstand der Erfindung sind Verfahren zur Herstellung von Mehrstufen-Copolymeren in Form von wässrigen Dispersionen durch mehrstufige, radikalisch initiierte Emulsionspolymerisation, dadurch gekennzeichnet, dass
a) in einer ersten Stufe 20 bis 75 Gew.-% Vinylacetat, gegebenenfalls Ethylen und gegebenenfalls ein oder mehrere weitere ethylenisch ungesättigte Monomere polymerisiert werden,
b) in einer zweiten Stufe in Gegenwart des Polymers aus der ersten Stufe a) 1 bis 25 Gew.-% Vinylacetat, 0,01 bis 2 Gew.-% an einem oder mehreren ethylenisch ungesättigten siliciumfunktionellen Monomeren und gegebenenfalls ein oder mehrere weitere ethylenisch ungesättigte Monomere polymerisiert werden und
c) in einer dritten Stufe in Gegenwart des Polymers aus der zweiten Stufe b) 5 bis 40 Gew.-% an einem oder mehreren Monomeren ausgewählt aus der Gruppe umfassend Ester der Acrylsäure, Ester der Methacrylsäure und Vinylaromaten und gegebenenfalls ein oder mehrere weitere ethylenisch ungesättigte Monomere polymerisiert werden,
   mit der Maßgabe, dass in der dritten Stufe c) keine ethylenisch ungesättigte Carbonsäure polymerisiert wird,
wobei sich die Angaben in Gew.-% auf das Gesamtgewicht der insgesamt in den Stufen a) bis c) eingesetzten Monomere beziehen.

Ein weiterer Gegenstand der Erfindung sind Mehrstufen-Copolymere in Form von wässrigen Dispersionen erhältlich nach dem vorgenannten mehrstufigen, radikalisch initiierten Emulsionspolymerisationsverfahren.

In der ersten Stufe a) werden vorzugsweise 30 bis 65 Gew.-%, besonders bevorzugt 35 bis 60 Gew.-% und am meisten bevorzugt 40 bis 55 Gew.-% Vinylacetat polymerisiert, bezogen auf das Gesamtgewicht der insgesamt in den Stufen a) bis c) eingesetzten Monomere.

In der ersten Stufe a) werden vorzugsweise ≥ 40 Gew.-%, besonders bevorzugt 50 bis 90 Gew.-% und am meisten bevorzugt 60 bis 80 Gew.-% Vinylacetat polymerisiert, bezogen auf das Gesamtgewicht der Monomere der Stufe a).

In der ersten Stufe a) werden vorzugsweise 1 bis 40 Gew.-%, besonders bevorzugt 2 bis 30 Gew.-% und am meisten bevorzugt 5 bis 15 Gew.-% Ethylen polymerisiert, bezogen auf das Gesamtgewicht der insgesamt in den Stufen a) bis c) eingesetzten Monomere.

In der ersten Stufe a) werden vorzugsweise 1 bis 30 Gew.-%, besonders bevorzugt 5 bis 25 Gew.-% und am meisten bevorzugt 10 bis 20 Gew.-% Ethylen polymerisiert, bezogen auf das Gesamtgewicht der Monomere der Stufe a).

Bevorzugte weitere ethylenisch ungesättigte Monomere für die erste Stufe a) sind Vinylester von unverzweigten oder verzweigten Carbonsäuren mit 3 bis 18 C-Atomen und ethylenisch ungesättigte Säuren.

Vorzugsweise werden in der ersten Stufe a) als weitere Monomere ein oder mehrere Vinylester von unverzweigten oder verzweigten Carbonsäuren mit 3 bis 18 C-Atomen und ein oder mehrere ethylenisch ungesättigte Säuren eingesetzt.

Bevorzugte Vinylester von unverzweigten oder verzweigten Carbonsäuren mit 3 bis 18 C-Atomen sind Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9R oder VeoVa10R (Handelsnamen der Firma Momentive). Besonders bevorzugt ist Vinylversatat und Vinyllaurat.

Bevorzugte ethylenisch ungesättigte Säuren sind ethylenisch ungesättigte Carbonsäuren, ethylenisch ungesättigten Phosphon- und Phosphorsäuren und insbesondere ethylenisch ungesättigte Sulfonsäuren sowie deren Salze.

Beispiele für ethylenisch ungesättigte Sulfonsäuren sind Vinylsulfonsäure, 2-Acrylamido-2-methyl-propansulfonsäure, 2-Acryloyloxyethansulfonsäure und 2-Methacryloyloxyethansulfonsäure, 2-Acryloyloxy- und 3-Methacryloyloxypropansulfonsäure. Bevorzugt sind Vinylsulfonsäure und 2-Acrylamido-2-methyl-propansulfonsäure.

Beispiele für ethylenisch ungesättigte Carbonsäuren, wie Mono- oder Dicarbonsäuren, sind Acrylsäure, Methacrylsäure, Crotonsäure, Maleinsäure, Fumarsäure und Itaconsäure. Bevorzugt sind Acrylsäure, Methacrylsäure und Fumarsäure.

Beispiele für ethylenisch ungesättigte Phosphonsäuren oder Phosphorsäuren sind Vinylphosphonsäure, Ester der Phosphonsäure oder Phosphorsäure mit Hydroxyalkyl(meth)acrylaten und ethylenisch ungesättigte Polyethoxyalkyletherphosphate.

Neben oder anstelle der vorgenannten Säuren können auch deren Salze verwendet werden, vorzugsweise deren Alkali- oder Ammoniumsalze, besonders bevorzugt deren Natriumsalze, wie beispielsweise die Natriumsalze der Vinylsulfonsäure und der 2-Acrylamidopropansulfonsäure.

Die weiteren ethylenisch ungesättigten Monomere der ersten Stufe a) sind allgemein von Vinylacetat und Ethylen verschieden.

In der ersten Stufe a) werden vorzugsweise 0 bis 25 Gew.-%, besonders bevorzugt 0,1 bis 20 Gew.-% und am meisten bevorzugt 1 bis 15 Gew.-% weitere ethylenisch ungesättigte Monomere der ersten Stufe a), insbesondere Vinylester von unverzweigten oder verzweigten Carbonsäuren mit 3 bis 18 C-Atomen, polymerisiert, bezogen auf das Gesamtgewicht der insgesamt in den Stufen a) bis c) eingesetzten Monomere.

In der ersten Stufe a) werden vorzugsweise 0 bis 40 Gew.-%, besonders bevorzugt 0,1 bis 30 Gew.-% und am meisten bevorzugt 1 bis 20 Gew.-% weitere ethylenisch ungesättigte Monomere der ersten Stufe a), insbesondere Vinylester von unverzweigten oder verzweigten Carbonsäuren mit 3 bis 18 C-Atomen, polymerisiert, bezogen auf das Gesamtgewicht der Monomere der Stufe a).

In der ersten Stufe a) werden vorzugsweise 0 bis 2 Gew.-%, besonders bevorzugt 0,01 bis 1 Gew.-% und am meisten bevorzugt 0,1 bis 0,5 Gew.-% ethylenisch ungesättigte Säuren polymerisiert, bezogen auf das Gesamtgewicht der insgesamt in den Stufen a) bis c) eingesetzten Monomere.

In der ersten Stufe a) werden vorzugsweise 0 bis 10 Gew.-%, besonders bevorzugt 0,01 bis 5 Gew.-% und am meisten bevorzugt 0,1 bis 2 Gew.-% ethylenisch ungesättigte Säuren polymerisiert, bezogen auf das Gesamtgewicht der Monomere der Stufe a).

Bevorzugt werden in der ersten Stufe a) keine ethylenisch ungesättigten Carbonsäuren copolymerisiert.

Die weiteren ethylenisch ungesättigten Monomere der ersten Stufe a) umfassen vorzugsweise keine ethylenisch ungesättigten siliciumfunktionellen Monomere und/oder keine ethylenisch ungesättigten epoxidfunktionellen Comonomere.

Beispiele für ethylenisch ungesättigte epoxidfunktionelle Comonomere sind Glycidylmethacrylat und Glycidylacrylat. Beispiele für ethylenisch ungesättigte siliciumfunktionelle Monomere sind weiter unten genannt.

Vorzugsweise umfassen die weiteren ethylenisch ungesättigten Monomere der ersten Stufe a) keine Ester der Acrylsäure oder Methacrylsäure und keine Vinylaromaten. Bevorzugt werden in der ersten Stufe a) keine Ester der Acrylsäure oder Methacrylsäure und keine Vinylaromaten copolymerisiert oder eingesetzt.

In der zweiten Stufe b) werden vorzugsweise 2 bis 20 Gew.-%, besonders bevorzugt 5 bis 15 Gew.-% Vinylacetat polymerisiert, bezogen auf das Gesamtgewicht der insgesamt in den Stufen a) bis c) eingesetzten Monomere.

In der zweiten Stufe b) werden vorzugsweise 40 bis 99,9 Gew.-%, mehr bevorzugt 50 bis 99 Gew.-%, noch mehr bevorzugt 55 bis 95 Gew.-%, besonders bevorzugt 60 bis 90 Gew.-%, ganz besonders bevorzugt 65 bis 85 Gew.-% und am meisten bevorzugt 70 bis 80 Gew.-% Vinylacetat polymerisiert, bezogen auf das Gesamtgewicht der Monomere der Stufe b).

Alternativ werden in der zweiten Stufe b) vorzugsweise 40 bis 99,99 Gew.-%, mehr bevorzugt 80 bis 99,9 Gew.-%, besonders bevorzugt 85 bis 99,5 Gew.-% und am meisten bevorzugt 90 bis 99 Gew.-% Vinylacetat polymerisiert, bezogen auf das Gesamtgewicht der Monomere der Stufe b).

Ethylenisch ungesättigte siliciumfunktionelle Monomere der zweiten Stufe b) sind beispielsweise ethylenisch ungesättigte Siliciumverbindungen der allgemeinen Formel R¹SiR²₀₋₂(OR³)₁₋₃, wobei R¹ die Bedeutung CH₂=CR⁴-(CH₂)₀₋₁ oder CH₂=CR⁴CO₂(CH₂)₁₋₃ hat, R² die Bedeutung C₁- bis C₃-Alkylrest, C₁- bis C₃-Alkoxyrest oder Halogen, vorzugsweise C₁ oder Br hat, R³ ein unverzweigter oder verzweigter, gegebenenfalls substituierter Alkylrest mit 1 bis 12 C-Atomen, vorzugsweise 1 bis 3 C-Atomen, ist oder ein Acylrest mit 2 bis 12 C-Atomen ist, wobei R³ gegebenenfalls durch eine Ethergruppe unterbrochen sein kann, und R⁴ für H oder CH₃ steht.

Bevorzugte ethylenisch ungesättigte siliciumfunktionelle Monomere sind γ-Acryl- bzw. γ-Methacryloxypropyltri(alkoxy)silane, α-Methacryloxymethyltri (alkoxy) silane, γ-Methacryloxypropyl-methyldi(alkoxy)silane; Vinylsilane wie Vinylalkyldi(alkoxy)-silane und Vinyltri(alkoxy)silane, wobei als Alkoxygruppen beispielsweise Methoxy-, Ethoxy-, Methoxyethylen, Ethoxyethylen-, Methoxypropylenglykolether- bzw. Ethoxypropylenglykolether-Reste eingesetzt werden können.

Beispiele für bevorzugte ethylenisch ungesättigte siliciumfunktionelle Monomere sind 3-Methacryloxypropyltrimethoxysilan, 3-Methacryloxypropylmethyldimethoxysilan, Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyltris-(1-methoxy)-isopropoxysilan, Vinyltributoxysilan, Vinyltriacetoxysilan, Methacryloxymethyltrimethoxysilan, 3-Methacryloxypropyl-tris(2-methoxyethoxy)silan, Vinyltrichorsilan, Vinylmethyldichlorsilan, Vinyltris-(2-methoxyethoxy)silan, Trisacetoxyvinylsilan, Allylvinyltrimethoxysilan, Allyltriacetoxysilan, Vinyldimethylmethoxysilan, Vinyldimethylethoxysilan, Vinylmethyldiacetoxysilan, Vinyldimethylacetoxysilan, Vinylisobutyldimethoxysilan, Vinyltriisopropyloxysilan, Vinyltributoxysilan, Vinyltrihexyloxysilan, Vinylmethoxydihexoxysilan, Vinyltrioctyloxysilan, Vinyldimethoxyoctyloxysilan, Vinylmethoxydioctyloxysilan, Vinylmethoxydilauryloxysilan, Vinyldimethoxylauryloxysilan sowie auch Polyethylenglykol-modifizierte Vinylsilane.

Geeignete ethylenisch ungesättigte siliciumfunktionelle Monomere der zweiten Stufe b) sind auch Silan-Gruppen enthaltene (Meth) acrylamide, der allgemeinen Formel CH₂=CR₅-CO-NR⁶-R⁷-SiR⁸ₙ-(R⁹)₃₋ₘ, wobei n= 0 bis 4, m= 0 bis 2, R⁵ entweder H oder eine Methyl-Gruppe ist, R⁶ H ist oder eine Alkyl-Gruppe mit 1 bis 5 C-Atomen ist; R⁷ eine Alkylen-Gruppe mit 1 bis 5 C-Atomen oder eine bivalente organische Gruppe in welcher die Kohlenstoffkette durch ein O- oder N-Atom unterbrochen wird, ist, R⁸ eine Alkyl-Gruppe mit 1 bis 5 C-Atomen ist, R⁹ eine AlkoxyGruppe mit 1 bis 40 C-Atomen ist, welche mit weiteren Heterocyclen substituiert sein können. In Monomeren, in denen 2 oder mehrere R⁵ oder R⁹- Gruppen vorkommen, können diese identisch oder unterschiedlich sein.

Beispiele für solche (Meth)acrylamido-alkylsilane sind: 3-(Meth)acrylamido-propyltrimethoxysilan, 3-(Meth)acrylamidopropyltriethoxysilan, 3-(Meth)acrylamido-propyltri(β-methoxyethoxy)silan, 2-(Meth)acrylamido-2-methylpropyltrimethoxysilan, 2-(Meth)acrylamido-2-methylethyltrimethoxysilan, N-(2-(Meth)acrylamido-ethyl)aminopropyltrimethoxysilan, 3-(Meth)ac-rylamido-propyltriacetoxysilan, 2-(Meth)acrylamido-ethyltrimethoxysilan, 1-(Meth)acrylamido-methyltrimethoxysilan, 3-(Meth)acrylamido-propylmethyldimethoxysilan, 3-(Meth)acryl-amido-propyldimethylmethoxysilan, 3-(N-Methyl-(Meth)acryl-amido)-propyltrimethoxysilan, 3-((Meth)acrylamido-methoxy)-3-hydroxypropyltrimethoxysilan, 3-((Meth)acrylamido-methoxy)-propyltrimethoxysilan, N,N-Dimethyl-N-trimethoxysilylpropyl-3-(Meth)acrylamido-propylammoniumchlorid und N-N-Dimethyl-N-tri-methoxysilylpropyl-2-(Meth)acrylamido-2-methylpropylammoniumchlorid.

Als ethylenisch ungesättigte siliciumfunktionelle Monomere werden am meisten bevorzugt Vinyltrimethoxysilan, Vinylmethyldimethoxysilan, Vinyltriethoxysilan, Vinylmethyldiethoxysilan, Vinyltris-(1-methoxy)-isopropoxysilan, Methacryloxypropyltris(2-methoxyethoxy)silan, 3-Methacryloxypropyltrimethoxysilan, 3-Methacryloxypropylmethyldimethoxysilan und Methacryloxymethyltrimethoxysilan sowie deren Gemische.

In der zweiten Stufe b) werden vorzugsweise 0,01 bis 2 Gew.-%, besonders bevorzugt 0,05 bis 1,5 Gew.-% und am meisten bevorzugt 0,1 bis 1,0 Gew.-% ethylenisch ungesättigte siliciumfunktionelle Monomere polymerisiert, bezogen auf das Gesamtgewicht der insgesamt in den Stufen a) bis c) eingesetzten Monomere.

In der zweiten Stufe b) werden vorzugsweise 0,1 bis 20 Gew.-%, besonders bevorzugt 0,5 bis 15 Gew.-% und am meisten bevorzugt 1 bis 10 Gew.-% ethylenisch ungesättigte siliciumfunktionelle Monomere polymerisiert, bezogen auf das Gesamtgewicht der Monomere der Stufe b).

Als weitere ethylenisch ungesättigte Monomere für die zweite Stufe b) sind ein oder mehrere Vinylester von unverzweigten oder verzweigten Carbonsäuren mit 3 bis 18 C-Atomen, ein oder mehrere ethylenisch ungesättigte Säuren und gegebenenfalls ein oder mehrere ethylenisch ungesättigte epoxidfunktionelle Comonomere bevorzugt. Diese Monomere können beispielsweise die weiter oben aufgeführten bevorzugten, besonders bevorzugten und beispielhaften Ausführungsformen annehmen.

Die weiteren ethylenisch ungesättigten Monomere der zweiten Stufe b) sind allgemein von Vinylacetat und ethylenisch ungesättigten siliciumfunktionellen Monomeren verschieden.

In der zweiten Stufe b) werden vorzugsweise 0 bis 15 Gew.-%, besonders bevorzugt 0,5 bis 10 Gew.-% und am meisten bevorzugt 1,0 bis 5 Gew.-% weitere ethylenisch ungesättigte Monomere der zweiten Stufe b) polymerisiert, bezogen auf das Gesamtgewicht der insgesamt in den Stufen a) bis c) eingesetzten Monomere.

In der zweiten Stufe b) werden vorzugsweise 0 bis 30 Gew.-%, besonders bevorzugt 0,1 bis 20 Gew.-% und am meisten bevorzugt 1 bis 10 Gew.-% weitere ethylenisch ungesättigte Monomere der zweiten Stufe b) polymerisiert, bezogen auf das Gesamtgewicht der Monomere der Stufe b).

In der zweiten Stufe b) werden vorzugsweise bis zu 2 Gew.-%, besonders bevorzugt 0,01 bis 1,5 Gew.-% und am meisten bevorzugt 0,1 bis 1,0 Gew.-% ethylenisch ungesättigte epoxidfunktionelle Comonomere polymerisiert, bezogen auf das Gesamtgewicht der insgesamt in den Stufen a) bis c) eingesetzten Monomere.

In der zweiten Stufe b) werden vorzugsweise 0,1 bis 20 Gew.-%, besonders bevorzugt 0,5 bis 15 Gew.-% und am meisten bevorzugt 1 bis 10 Gew.-% ethylenisch ungesättigte epoxidfunktionelle Comonomere polymerisiert, bezogen auf das Gesamtgewicht der Monomere der Stufe b).

Besonders bevorzugt werden in der zweiten Stufe b) keine ethylenisch ungesättigte Säuren, insbesondere keine ethylenisch ungesättigten Carbonsäuren eingesetzt und/oder copolymerisiert.

Am meisten bevorzugt werden in der zweiten Stufe b) keine der oben genannten weiteren ethylenisch ungesättigten Monomere eingesetzt und/oder copolymerisiert.

Ester der Acrylsäure oder Methacrylsäure, die keine EpoxidGruppe tragen, sowie Vinylaromaten werden von den weiteren ethylenisch ungesättigten Monomeren der zweiten Stufe b) vorzugsweise nicht umfasst. Besonders bevorzugt umfassen die weiteren ethylenisch ungesättigten Monomere der zweiten Stufe b) keine Ester der Acrylsäure oder Methacrylsäure und keine Vinylaromaten. Die weiteren ethylenisch ungesättigten Monomere der zweiten Stufe b) umfassen besonders bevorzugt auch keine ethylenisch ungesättigten epoxidfunktionellen Comonomere. Vorzugsweise wird in der zweiten Stufe b) kein zusätzliches Ethylen eingebracht.

Ester der Acrylsäure oder Methacrylsäure der dritten Stufe c) sind beispielsweise Ester von unverzweigten oder verzweigten Alkoholen mit 1 bis 15 C-Atomen, wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat.

Besonders bevorzugt ist das Copolymerisieren von 2-Ethylhexylacrylat und/oder n-Butylacrylat und einem oder mehreren Estern der Acrylsäure oder Methacrylsäure ausgewählt aus der Gruppe umfassend Methylmethacrylat, tert.-Butylmethacrylat, tert.-Butylacrylat, Laurylacrylat, Stearylacrylat und Methylmethacrylat.

Als Vinylaromaten sind Methylstyrol und Vinyltoluol und insbesondere Styrol bevorzugt.

Bevorzugt ist auch das Copolymerisieren von einem oder mehreren Estern der (Meth)Acrylsäure und einem oder mehreren Vinylaromaten, insbesondere Styrol.

In der dritten Stufe c) werden vorzugsweise 5 bis 40 Gew.-%, besonders bevorzugt 10 bis 35 Gew.-% und am meisten bevorzugt 20 bis 30 Gew.-% von einem oder mehreren Monomeren ausgewählt aus der Gruppe umfassend Ester der (Meth)Acrylsäure und Vinylaromaten polymerisiert, bezogen auf das Gesamtgewicht der insgesamt in den Stufen a) bis c) eingesetzten Monomere.

In der dritten Stufe c) werden vorzugsweise 70 bis 100 Gew.-%, besonders bevorzugt 80 bis 100 Gew.-% und am meisten bevorzugt 95 bis 100 Gew.-% von einem oder mehreren Monomeren ausgewählt aus der Gruppe umfassend Ester der (Meth)Acrylsäure und Vinylaromaten polymerisiert, bezogen auf das Gesamtgewicht der Monomere der Stufe c).

Als weitere ethylenisch ungesättigte Monomere für die dritte Stufe c) sind ein oder mehrere ethylenisch ungesättigte siliciumfunktionelle Monomere und gegebenenfalls ein oder mehrere ethylenisch ungesättigte epoxidfunktionelle Comonomere bevorzugt. Diese Monomere können beispielsweise die weiter oben aufgeführten bevorzugten, besonders bevorzugten und beispielhaften Ausführungsformen annehmen.

Die weiteren ethylenisch ungesättigten Monomere der dritten Stufe c) sind allgemein von Vinylaromaten verschieden. Die weiteren ethylenisch ungesättigten Monomere der dritten Stufe c) umfassen als Ester der Acrylsäure oder Methacrylsäure vorzugsweise ausschließlich ethylenisch ungesättigte epoxidfunktionelle Comonomere.

In der dritten Stufe c) werden vorzugsweise 0,01 bis 2 Gew.-%, besonders bevorzugt 0,05 bis 1,5 Gew.-% und am meisten bevorzugt 0,1 bis 1,0 Gew.-% ethylenisch ungesättigte siliciumfunktionelle Monomere polymerisiert, bezogen auf das Gesamtgewicht der insgesamt in den Stufen a) bis c) eingesetzten Monomere.

In der dritten Stufe c) werden vorzugsweise 0,1 bis 20 Gew.-%, besonders bevorzugt 0,5 bis 15 Gew.-% und am meisten bevorzugt 1 bis 10 Gew.-% ethylenisch ungesättigte siliciumfunktionelle Monomere polymerisiert, bezogen auf das Gesamtgewicht der Monomere der Stufe c).

In der dritten Stufe c) werden vorzugsweise bis zu 2 Gew.-%, besonders bevorzugt 0,01 bis 1,5 Gew.-% und am meisten bevorzugt 0,1 bis 1,0 Gew.-% ethylenisch ungesättigte epoxidfunktionelle Comonomere polymerisiert, bezogen auf das Gesamtgewicht der insgesamt in den Stufen a) bis c) eingesetzten Monomere.

In der dritten Stufe c) werden vorzugsweise 0,1 bis 20 Gew.-%, besonders bevorzugt 0,5 bis 15 Gew.-% und am meisten bevorzugt 1 bis 10 Gew.-% ethylenisch ungesättigte epoxidfunktionelle Comonomere polymerisiert, bezogen auf das Gesamtgewicht der Monomere der Stufe c).

Vorzugsweise werden in der dritten Stufe c) keine ethylenisch ungesättigten Säuren eingesetzt und/oder copolymerisiert.

Bevorzugt ist auch, in der dritten Stufe c) keine Vinylester von unverzweigten oder verzweigten Carbonsäuren mit 1 bis 18 C-Atomen, insbesondere kein Vinylacetat, einzusetzen und/oder zu copolymerisieren.

Vorzugsweise wird in der dritten Stufe c) kein zusätzliches Ethylen eingebracht.

Ester der Acrylsäure oder Methacrylsäure, die keine EpoxidGruppe tragen, sowie Vinylaromaten werden von den weiteren ethylenisch ungesättigten Monomeren der dritten Stufe c) vorzugsweise nicht umfasst. Besonders bevorzugt umfassen die weiteren ethylenisch ungesättigten Monomere der dritten Stufe c) keine Ester der Acrylsäure oder Methacrylsäure und keine Vinylaromaten.

Mit den bevorzugten Ausführungsformen bezüglich Säure-Monomere beziehungsweise siliciumfunktionelle Monomere in den Stufen a) bis c) kann die erfindungsgemäße Aufgabe noch besser gelöst, insbesondere auch die Nassabriebsbeständigkeit verbessert werden.

Mehrstufen-Copolymeren basieren auf vorzugsweise 40 bis 80 Gew.-%, insbesondere 50 bis 70 Gew.-% Vinylacetat, 0,01 bis 3 Gew.-%, insbesondere 0,1 bis 0,5 Gew.-% ethylenisch ungesättigten siliciumfunktionellen Monomeren,
10 bis 40 Gew.-%, insbesondere 20 bis 35 Gew.-% an Monomeren ausgewählt aus der Gruppe umfassend Ester der (Meth)Acrylsäure und Vinylaromaten,
gegebenenfalls 1 bis 30 Gew.-%, insbesondere 5 bis 15 Gew.-% Ethylen und
gegebenenfalls 0 bis 25 Gew.-%, insbesondere 3 bis 20 Gew.-% weiteren ethylenisch ungesättigten Monomeren,
wobei sich die Angaben in Gew.-% auf das Gesamtgewicht der Monomere beziehen.

Hierbei kommen als weitere ethylenisch ungesättigte Monomere vorzugsweise 0 bis 20 Gew.-%, insbesondere 3 bis 15 Gew.-% Vinylester von unverzweigten oder verzweigten Carbonsäuren mit 3 bis 18 C-Atomen und gegebenenfalls 0 bis 5 Gew.-%, insbesondere 0,1 bis 2 Gew.-% ethylenisch ungesättigte Säuren, insbesondere ethylenisch ungesättigte Sulfonsäuren, oder deren Salze zum Einsatz, je bezogen auf das Gesamtgewicht der Monomere.

Die Mehrstufen-Copolymeren sind vorzugsweise Emulgator- und/ oder Schutzkolloid stabilisiert. Die mehrstufige, radikalisch initiierte Emulsionspolymerisation erfolgt vorzugsweise in Gegenwart von einem oder mehreren Emulgatoren und/oder einem oder mehreren Schutzkolloiden.

Vorzugsweise werden 15 bis 30 Gew.-% Schutzkolloide eingesetzt, bezogen auf die insgesamte Menge an Schutzkolloiden und Emulgatoren.

Vorzugsweise werden 70 bis 85 Gew.-% Emulgatoren eingesetzt, bezogen auf die insgesamte Menge an Schutzkolloiden und Emulgatoren.

Vorzugsweise werden 40 bis 70 Gew.-% nichtionische Emulgatoren eingesetzt, bezogen auf die insgesamte Menge an Schutzkolloiden und Emulgatoren.

Vorzugsweise werden 15 bis 30 Gew.-% anionische Emulgatoren eingesetzt, bezogen auf die insgesamte Menge an Schutzkolloiden und Emulgatoren, insbesondere in den Stufen a) bis c), vorzugsweise in Stufe a).

Beispiele für Schutzkolloide sind Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate, Dextrine und Cyclodextrine; Proteine wie Kasein oder Kaseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bevorzugt sind teilverseifte oder vollverseifte Polyvinylalkohole mit einem Hydrolysegrad von vorzugsweise 80 bis 100 Mol-%. Besonders bevorzugt sind teilverseifte Polyvinylalkohole mit einem Hydrolysegrad von 80 bis 95 Mol-%, insbesondere mit einer Höpplerviskosität, in 4 %-iger wässriger Lösung von 1 bis 30 mPas (Methode nach Höppler bei 20°C, DIN 53015). Am meisten bevorzugt werden Polyvinylalkohole mit einem Hydrolysegrad von 85 bis 94 Mol-%, insbesondere mit einer Höpplerviskosität, in 4 %-iger wässriger Lösung von 3 bis 15 mPas (Methode nach Höppler bei 20°C, DIN 53015). Die genannten Schutzkolloide sind mittels des Fachmanns bekannter Verfahren zugänglich.

Schutzkolloide können in jeder der Stufen a) bis c) eingesetzt werden, werden vorzugsweise aber in der ersten Stufe a) eingesetzt, insbesondere in deren Vorlage. Besonders bevorzugt werden Schutzkolloide ausschließlich in der ersten Stufe a) eingesetzt.

Schutzkolloide sind in einer Menge von vorzugsweise 0,01 bis 10 Gew.-%, besonders bevorzugt 0,05 bis 5 Gew.-% und am meisten bevorzugt 0,1 bis 1,5 Gew.-% enthalten, bezogen auf das Gesamtgewicht der insgesamt in den Stufen a) bis c) eingesetzten Monomere.

In der ersten Stufe a) werden vorzugsweise 0,5 bis 15 Gew.-%, besonders bevorzugt 0,5 bis 10 Gew.-% und am meisten bevorzugt 0,5 bis 5 Gew.-% Schutzkolloide eingesetzt, bezogen auf das Gesamtgewicht der Monomere der Stufe a).

Geeignete Emulgatoren sind allgemein kationische Emulgatoren, insbesondere nichtionische Emulgatoren und/oder anionische Emulgatoren. Vorzugsweise erfolgt die mehrstufige, radikalisch initiierte Emulsionspolymerisation in Gegenwart von einem oder mehreren nichtionische Emulgatoren und einem oder mehreren anionischen Emulgatoren.

Beispiele für anionische Emulgatoren sind Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Besonders bevorzugt sind Alkylsulfonate und Alkylsulfate, insbesondere Laurylsulfate.

Beispiele für nichtionische Emulgatoren sind solche mit Alkylenoxidgruppen, insbesondere Acyl-, Alkyl-, Oleyl- oder Alkylarylethoxylate, wie Alkylpolyglykolether oder Alkylarylpolyglykolether mit 8 bis 40 Ethylenoxid-Einheiten. Bevorzugt sind ethoxylierte Mono-, Di- und Trialkylphenole (vorzugsweise mit EO-Grad von 3 bis 50 und Alkylsubstituentenrest von C₄ bis C₁₂) sowie ethoxylierte Fettalkohole (vorzugsweise mit EO-Grad von 3 bis 80 und Alkylrest von C₈ bis C₃₆), insbesondere C₁₀-C₁₄-Fettalkohol-(3-40)-Ethoxylate, Polyoxyethylensorbitanmonooleat mit 20 Ethylenoxidgruppen, Copolymere aus Ethylenoxid und Propylenoxid mit einem Mindestgehalt an Ethylenoxid von 10 Gewichtsprozent, die Polyethylenoxid(4-40)-Ether des Oleylalkohols und die Polyethenoxid(4-40)-Ether des Nonylphenols. Besonders bevorzugt sind die Polyethylenoxid (4-40)-Ether von Fettalkoholen, insbesondere von Oleylalkohol, Stearylalkohol oder C₁₁-Alkylalkoholen.

Emulgatoren können in jeder der Stufen a) bis c) eingesetzt werden, werden vorzugsweise aber in der ersten Stufe a) eingesetzt, insbesondere in deren Vorlage. Besonders bevorzugt werden Emulgatoren ausschließlich in der ersten Stufe a) eingesetzt.

In der ersten Stufe a) werden vorzugsweise 0,4 bis 15 Gew.-%, besonders bevorzugt 0,8 bis 10 Gew.-% und am meisten bevorzugt 1,5 bis 5 Gew.-% Emulgatoren eingesetzt, bezogen auf das Gesamtgewicht der Monomere der Stufe a).

Emulgatoren werden in einer Menge von vorzugsweise 0,1 bis 10 Gew.-%, besonders bevorzugt 0,2 bis 7 Gew.-% und am meisten bevorzugt 0,7 bis 4 Gew.-% eingesetzt, bezogen auf das Gesamtgewicht der insgesamt in den Stufen a) bis c) eingesetzten Monomere.

Nichtionische Emulgatoren werden in einer Menge von vorzugsweise 0,05 bis 10 Gew.-%, besonders bevorzugt 0,1 bis 5 Gew.-% und am meisten bevorzugt 0,5 bis 3 Gew.-% eingesetzt, bezogen auf das Gesamtgewicht der insgesamt in den Stufen a) bis c) eingesetzten Monomere.

Anionische Emulgatoren werden in einer Menge von vorzugsweise 0,05 bis 5 Gew.-%, besonders bevorzugt 0,1 bis 2 Gew.-% und am meisten bevorzugt 0,2 bis 1 Gew.-% eingesetzt, bezogen auf das Gesamtgewicht der insgesamt in den Stufen a) bis c) eingesetzten Monomere.

Mit den bevorzugten Maßgaben bezüglich Schutzkolloiden und Emulgatoren kann die erfindungsgemäße Aufgabe noch besser gelöst werden.

Die Herstellung der Mehrstufen-Copolymere erfolgt nach dem Emulsionspolymerisationsverfahren.

Die Temperatur für die Emulsionspolymerisation beträgt vorzugsweise 40°C bis 120°C, besonders bevorzugt 60°C bis 95°C. Bei der Copolymerisation von gasförmigen Comonomeren wie Ethylen, 1,3-Butadien oder Vinylchlorid kann auch unter Druck, im Allgemeinen zwischen 5 bar und 100 bar, gearbeitet werden.

Geeignete Radikalinitiatoren sind gängige öllösliche oder wasserlösliche Initiatoren. Beispiele für öllösliche Initiatoren sind öllösliche Peroxide, wie t-Butylperoxy-2-ethylhexanoat, t-Butylperoxypivalat, t-Butylperoxyneodecanoat, Dibenzoylperoxid, t-Amylperoxypivalat, Di-(2-ethylhexyl)peroxydicarbonat, 1,1-Bis(t-Butylperoxy)-3,3,5-trimethylcyclohexan, Di-(4-t-Butylcyclohexyl)peroxydicarbonat, Dilauroylperoxid, Cumylhydroperoxid, oder öllösliche Azoinitiatoren, wie Azobisisobutyronitril oder Dimethyl-2,2'-Azobis(2-methylpropionat). Beispiele für wasserlösliche Initiatoren sind Peroxodisulfate, wie Kaliumperoxodisulfat, Wasserstoffperoxid, wasserlösliche Hydroperoxide wie tert.-Butylhydroperoxid, Mangan(III)-Salze oder Cer(IV)-Salze. Die Initiatoren werden im Allgemeinen in einer Menge von 0,005 bis 3,0 Gew.-%, bevorzugt 0,01 bis 1,5 Gew.-%, jeweils bezogen auf Gesamtgewicht der ethylenisch ungesättigten Monomere, eingesetzt. Bevorzugt ist der Einsatz von Redox-Initiatoren. Als Redox-Initiatoren verwendet man Kombinationen aus den genannten Initiatoren in Kombination mit Reduktionsmitteln. Geeignete Reduktionsmittel sind beispielsweise Natriumsulfit, Eisen(II)-Salze, Natriumhydroxymethansulfinat und Ascorbinsäure. Bevorzugte Redox-Initiatoren sind Cer(IV)-Salze, wie Ammoniumcer(IV)-nitrat, Mangan(III)-Salze oder Peroxodisulfate sowie Kombinationen dieser Initiatoren. Bei Einsatz von Reduktionsmitteln beträgt die Reduktionsmittelmenge vorzugsweise 0,01 bis 0,5 Gew.-%, bezogen auf das Gesamtgewicht der ethylenisch ungesättigten Monomere.

In der mehrstufigen Emulsionspolymerisation des vorliegenden Verfahrens werden allgemein zuerst Monomere der Stufe a), dann Monomere der Stufe b) und schließlich Monomere der Stufe c) eingesetzt beziehungsweise polymerisiert. Jede Stufe der mehrstufigen Polymerisation wird mittels radikalischer Emulsionspolymerisation durchgeführt.

Die Stufe a) kann unter Vorlage aller oder einzelner Bestandteile des Reaktionsgemisches oder unter teilweiser Vorlage und Nachdosierung aller oder einzelner Bestandteile des Reaktionsgemisches oder nach dem Dosierverfahren ohne Vorlage durchgeführt werden. Die Monomere der Stufe a) und die Initiatoren in Stufe a) werden ganz oder vorzugsweise teilweise vorgelegt und die gegebenenfalls verbleibende Mengen an ethylenisch ungesättigten Monomeren und Initiatoren werden zudosiert.

Anschließend an die erste Stufe a) werden die Monomere der zweiten Stufe b) zugegeben, beispielsweise in Form einer Lösung oder einer Emulsion oder vorzugsweise in reiner Form.

Die Monomere der zweiten Stufe b) werden allgemein nach vollständiger Zugabe der Monomere der ersten Stufe a) zugegeben, insbesondere werden die Monomere der zweiten Stufe b) unmittelbar nach vollständiger Zugabe der Monomere der ersten Stufe a) zugegeben.

Die erste Polymerisationsstufe a) wird durchgeführt, bis vorzugsweise mindestens 70 Gew.-%, besonders bevorzugt mindestens 80 Gew.-% der in Stufe a) eingesetzten Monomere polymerisiert sind (Umsatzgrad).

Vorzugsweise wird die Polymerisation nach Zugabe der Monomere der ersten Stufe a) und vor Zugabe der Monomere der zweiten Stufe b) nicht unterbrochen.

Alternativ kann die Polymerisation vor Zugabe der Monomere der zweiten Stufe b) unterbrochen werden und auf Zugabe von Monomeren der Stufe b) erneut initiiert werden, beispielsweise durch Zugabe von Initiator.

Vorzugsweise wird die Initiator-Zugabe beim Übergang von der ersten Stufe a) zur zweiten Stufe b) nicht unterbrochen. Initiator für die zweite Stufe b) kann vollständig zu Beginn der zweiten Stufe b) zugegeben werden, oder teilweise zu Beginn der zweiten Stufe b) zugegeben und der verbleibende Rest im Verlauf der zweiten Stufe b) zudosiert werden, oder vorzugsweise vollständig während der Durchführung der zweiten Stufe b) zudosiert werden.

Der Umsatzgrad wird vorzugsweise mittels ¹H NMR-Spektroskopie bestimmt, insbesondere anhand der polymerisierten Vinylacetat-Einheiten und des Vinylacetat-Restmonomeranteils.

Im Anschluss an die zweite Stufe b) werden die Monomere der dritten Stufe c) zugegeben, beispielsweise in Form einer Lösung oder einer Emulsion oder vorzugsweise in reiner Form.

Die Monomere der dritten Stufe c) werden allgemein nach vollständiger Zugabe der Monomere der zweiten Stufe b) zugegeben, insbesondere werden die Monomere der dritten Stufe c) unmittelbar nach vollständiger Zugabe der Monomere der zweiten Stufe b) zugegeben.

Die zweite Polymerisationsstufe b) wird durchgeführt, bis vorzugsweise mindestens 85 Gew.-%, besonders bevorzugt mindestens 90 Gew.-% der in den Stufen a) und b) eingesetzten Monomere polymerisiert sind (Umsatzgrad).

Vorzugsweise wird die Polymerisation nach Zugabe der Monomere der zweiten Stufe b) und vor Zugabe der Monomere der dritten Stufe c) nicht unterbrochen.

Alternativ kann die Polymerisation vor Zugabe der Monomere der dritten Stufe c) unterbrochen werden und auf Zugabe von Monomeren der Stufe c) erneut initiiert werden, beispielsweise durch Zugabe von Initiator.

Vorzugsweise wird die Initiator-Zugabe beim Übergang von der zweiten Stufe b) zur dritten Stufe c) nicht unterbrochen. Initiator für die dritte Stufe c) kann vollständig zu Beginn der dritten Stufe c) zugegeben werden, oder teilweise zu Beginn der dritten Stufe c) zugegeben und der verbleibende Rest im Verlauf der dritten Stufe c) zudosiert werden, oder vorzugsweise vollständig während der Durchführung der dritten Stufe c) zudosiert werden.

Emulgatoren und/oder Schutzkolloide, die auch zur Stabilisierung verwendet werden, können vor Initiierung der ersten Stufe a) vollständig vorgelegt werden, oder teilweise vorgelegt und der verbleibende Rest kann zudosiert werden, oder vollständig zudosiert werden.

Emulgatoren und/oder Schutzkolloide können generell vor und/oder während der ersten Stufe a) und/oder während der zweiten Stufe b) und/oder während der dritten Stufe c) eingebracht werden.

Vorzugsweise werden Emulgatoren und/oder Schutzkolloide vollständig vor oder während der ersten Stufe a) eingebracht. Besonders bevorzugt werden sämtliche Mengen an Emulgatoren und/oder Schutzkolloiden vollständig vor Initiierung der ersten Stufe a) vorgelegt.

Nach der dritten Stufe c) kann zur Restmonomerentfernung in Anwendung bekannter Methoden nachpolymerisiert werden. Flüchtige Restmonomere und weitere flüchtige Bestandteile können auch mittels Destillation oder Strippverfahren, vorzugsweise unter reduziertem Druck, entfernt werden.

Die wässrigen Dispersionen der Mehrstufen-Copolymeren haben einen Feststoffgehalt von vorzugsweise 30 bis 75 Gew.-%, besonders bevorzugt von 45 bis 60 Gew.-%.

Die Mehrstufen-Copolymeren haben gewichtsmittlere Partikeldurchmesser Dw vorzugsweise zwischen 200 und 3000 nm, mehr bevorzugt zwischen 300 und 2500 nm, besonders bevorzugt zwischen 400 und 2000 nm und am meisten bevorzugt zwischen 500 bis 1500 nm.

Die Bestimmung der Parameter Dw und Dn beziehungsweise der Teilchengrößenverteilung erfolgt mittels Laserlichtbeugung und Laserlichtstreuung anhand der Mehrstufen-Copolymeren mit dem Messgerät LS13320 mit dem optischen Modell PVAC.RF780D, einschließend PIDS, der Firma Beckmann-Coulter und unter Beachtung der Vorschrift des Geräteherstellers nach hinreichender Verdünnung der wässrigen Polymerdispersionen mit vollentsalztem Wasser.

Die Mehrstufen-Copolymere haben eine Polydispersität PD von vorzugsweise ≤ 6, mehr bevorzugt ≤ 5, noch mehr bevorzugt ≤ 4, besonders bevorzugt ≤ 3,5 und am meisten bevorzugt ≤ 3,1. Die Polydispersität PD steht für das Verhältnis von gewichtsmittlerem Teilchendurchmesser Dw zu zahlenmittlerem Teilchendurchmesser Dn, PD = Dw/Dn.

Mit den Parametern Dw und PD der Mehrstufen-Copolymere kann die erfindungsgemäße Aufgabe noch besser gelöst werden.

Die Brookfield-Viskosität der wässrigen Dispersionen der Mehrstufen-Copolymere beträgt vorzugsweise 100 bis 6000 mPas, besonders bevorzugt 300 bis 4000 mPas und am meisten bevorzugt 500 bis 2000 mPas (bestimmt mit einem Brookfield-Viskosimeter bei 23°C bei 20 UPM bei einem Feststoffgehalt der Dispersionen von 55%).

Die Monomerauswahl bzw. die Auswahl der Gewichtsanteile der Comonomere erfolgt dabei so, dass die Mehrstufen-Copolymere eine Glasübergangstemperatur Tg von -50°C bis +120°C, vorzugsweise -35°C bis +45°C aufweisen. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Das Mehrstufen-Copolymere eignen sich beispielsweise als Bindemittel für Beschichtungsmittel, beispielsweise Dispersionsfarben oder Putze, insbesondere mit hohen pH-Werten von beispielsweise 10 bis 11,5, generell für den Innen- wie Außenbereich.

Vorzugsweise enthalten die Dispersionsfarben oder Putze keine Biozide.

Dispersionsfarben enthalten beispielsweise ein oder mehrere Pigmente und/oder ein oder mehrere Füllstoffe, ein oder mehrere Mehrstufen-Copolymere, gegebenenfalls ein oder mehrere sonstige, von den Mehrstufen-Copolymeren verschiedene organische Polymere von ethylenisch ungesättigten Monomeren, gegebenenfalls Wasserglas, gegebenenfalls Silikonate oder Silicate und gegebenenfalls ein oder mehrere Additive sowie Wasser.

Bevorzugte Rezepturen für Dispersionsfarben enthalten 5 bis 75 Gew.-% Pigment und/oder Füllstoff, insbesondere 1 bis 35 Gew.-% Pigmente und/oder 0 bis 60 Gew.-% Füllstoffe, 1 bis 25 Gew.-%, insbesondere 5 bis 15 Gew.-% Mehrstufen-Copolymere (fest/fest), vorzugsweise in Form von wässrigen Dispersionen, gegebenenfalls 0,1 bis 25 Gew.-% sonstige organische Polymere von ethylenisch ungesättigten Monomeren (fest/fest), vorzugsweise in Form von wässrigen Dispersionen, bis zu 5 Gew.-%, insbesondere 0,1 bis 3,5 Gew.-% Wasserglas, bis zu 5 Gew.-%, insbesondere 0,1 bis 3,5 Gew.-% Silikonate, insbesondere Alkalimetallalkylsilikonate, oder Silicate, insbesondere wasserlösliche Alkalimetallsilikate, bis zu 10 Gew.-%, insbesondere 0,1 bis 5 Gew.-% Additive und Wasser, wobei sich die Angaben in Gew.-% auf das Trockengewicht der Dispersionsfarben beziehen und sich zu 100 Gew.-% aufaddieren.

Die Herstellung der Beschichtungsmittel kann auf herkömmliche Weise in gängigen Vorrichtungen erfolgen. Es können die gängigen Pigmente, Füllstoffe, Silikonate, Silicate oder Additive Einsatz finden. Beispiele für Additive sind Dispergiermittel, Netzmittel, Verdickungsmittel, Stabilisatoren, Entschäumer und Hydrophobierungsmittel. Weitere Angaben zu bevorzugten Bestandteilen der Beschichtungsmittel oder zu deren Herstellung finden sich beispielsweise in WO2017/144694.

Überraschenderweise sind die erfindungsgemäßen Mehrstufen-Copolymere trotz ihres erheblichen Vinylacetat-Anteils auch in wässrigen Dispersionen oder wässrigen Zusammensetzungen mit hohen pH-Werten sehr stabil. So bleibt der pH-Wert der Dispersionen auch nach längerer Lagerung konstant, selbst bei pH-Werten von 10 bis 11,5. Vorteilhafterweise sind mit den erfindungsgemäßen Mehrstufen-Copolymeren Konservierungsmittel-freie Beschichtungsmittel möglich. Zudem werden bei Einsatz der Mehrstufen-Copolymere in Farben ein sehr gutes Pigmentdispergierverhalten und nach Applikation der Farbe sehr gute Nassabriebbeständigkeiten und eine hohe Deckkraft erhalten.

Durch erfindungsgemäßes Einpolymerisieren von Vinylestern von unverzweigten oder verzweigten Carbonsäuren mit 3 bis 18 C-Atomen kann die pH-Stabilität weiter verbessert werden.

Die nachfolgenden Beispiele dienen der weiteren Erläuterung der Erfindung, ohne diese einzuschränken:

| | |
|---|---|
| Emulgator 1: | Blockcopolymer aus Ethylenoxid und propylenoxid 40/60, 20%ig in Wasser (Genapol PF40); |
| Emulgator 2: | Isotridecylethoxylat mit 15 Ethylenoxideinheiten, 40%ig in Wasser (Genapol X150); |
| Emulgator 3: | sekundäres Alkylsulfonat, 30%ig in Wasser (Mersolat); |
| Schutzkolloid 4: | teilverseifter Polyvinylalkohol mit einer Höpplerviskosität von 25 mPas und einer Verseifungszahl von 140; |
| TBHP: | tertiär-Butylhydroperoxid; |
| Brüggolit FF6: | Mischung aus verschiedenen niederwertigen Schwefelverbindungen, Brüggemann. |

### Beispiel 1:

In einem 5 Liter Druckautoklav wurden 835 g Wasser, 54 g der 20%igen wässrigen Lösung des Emulgators 1, 94 g der 40%igen wässrigen Lösung des Emulgators 2, 54 g der 30%igen wässrigen Lösung des Emulgators 3, 209 g einer 10%igen wässrigen Lösung von Schutzkolloid 4 und 17 g einer 25%igen wässrigen Natriumvinylsulfonat-Lösung vorgelegt und gut gemischt. Diese Mischung wurde mit 2 g Ameisensäure(50%ig) auf pH 4,0 eingestellt. Zu dieser Mischung wurden dann 6,5 g einer 1%igen Eisenammoniumsulfatlösung und 214 g Vinylacetat gegeben. Die Emulsion wurde mit 550 UPM gerührt und auf 70°C aufgeheizt, danach wurde Ethylen auf 27 bar aufgedrückt, was einer Menge von 130 g entsprach.

Anschließend wurde die Polymerisation durch Zugabe von TBHP (10%ig) mit 4,1 g/h und Brüggolit FF6 (5%ig) mit 13,4 g/h gestartet. 20 min nach Reaktionsbeginn wurden folgende Dosierungen gestartet: 1500 g Vinylacetat in 2,5 h, sowie eine Lösung von 3,5 g Ameisensäure in 722 g Wasser in 3,0 h; die Initiatordosierungen wurden auf 8,0 g/h TBHP (10%ig) und 29 g/h Brüggolit FF6 (5%ig) erhöht, der Ethylendruck wurde auf 35 bar erhöht, bis eine Gesamtmenge Ethylen von 330 g (einschließlich der oben genannten 130 g Ethylen) eingebracht war.

Nach Dosierende von Vinylacetat wurde eine Dosierung aus 6,5 g Vinyltriethoxysilan und 191 g Vinylacetat mit 394 g/h gestartet für 30 min.

Anschließend wurde eine Dosierung aus 324 g Butylacrylat und 324 g Methylmethacrylat gestartet und in 45 min mit 865 g/h zudosiert. Nach Dosierende wurden die Initiatorraten auf 9,6 g/h TBHP (10%ig) und 35,7 g/h Brüggolit FF6 (5%ig) erhöht und für 40 min auspolymerisiert.

Danach wurde der Autoklav gekühlt und das Reaktionsgemisch von nicht umgesetztem Ethylen durch Entspannen befreit. Zur Reduktion von freiem Monomer wurden nochmals 13 g TBHP (10%ig) und 47,4 g Brüggolit FF6 (5%ig) über 1 h zudosiert. Abschließend wurden die Dispersionen bei Bedarf mit Wasser auf einem maximalen Festgehalt von 54% verdünnt, über 250 µm filtriert und abgefüllt.

### Beispiel 2:

Das Vorgehen entsprach Beispiel 1 mit folgenden Änderungen:
in der Vorlage wurden 27 g Versaticsäurevinylester und 187 g Vinylacetat statt 214 g Vinylacetat eingesetzt;
statt 1500 g Vinylacetat wurde eine Mischung aus 135 g Versaticsäurevinylester und 1365 g Vinylacetat in 2,5 h dosiert.

### Beispiel 3:

Das Vorgehen entsprach Beispiel 1 mit folgenden Änderungen:
- in der Vorlage wurden 27 g Versaticsäurevinylester und 186 g Vinylacetat statt 214 g Vinylacetat eingesetzt;
   statt 1500 g Vinylacetat wurde eine Mischung aus 269 g Versaticsäurevinylester und 1225 g Vinylacetat in 2,5 h dosiert;
- die Mischung aus Butylacrylat und Methylmethacrylat bestand aus jeweils 322 g statt 324 g.

### Beispiel 4:

Das Vorgehen entsprach Beispiel 1 mit folgenden Änderungen:
- in der Vorlage wurden 203 g Vinylacetat eingesetzt und die Vinylacetatdosierung bestand aus 1430 g Vinylacetat;
- die Mischung aus Vinyltriethoxysilan und Vinylacetat bestand aus 6,5 g beziehungsweise 310 g;
- die Mischung aus Butylacrylat und Methylmethacrylat bestand aus jeweils 386 g statt 324 g.

### Beispiel 5:

Das Vorgehen entsprach Beispiel 1 mit folgenden Änderungen:
- in der Vorlage wurden 198 g Vinylacetat eingesetzt und die Vinylacetatdosierung bestand aus 1390 g Vinylacetat;
- die Mischung aus Vinyltriethoxysilan und Vinylacetat bestand aus 6,0 g beziehungsweise 302 g;
- die Mischung aus Butylacrylat und Methylmethacrylat bestand aus jeweils 450 g statt 324 g.

### Beispiel 6:

Das Vorgehen entsprach Beispiel 1 mit folgenden Änderungen:
- in der Vorlage wurden 25 g Versaticsäurevinylester und 172 g Vinylacetat statt 214 g Vinylacetat eingesetzt;
   statt 1500 g Vinylacetat wurde eine Mischung aus 247 g Versaticsäurevinylester und 1128 g Vinylacetat in 2,5 h dosiert;
- die Mischung aus Vinyltriethoxysilan und Vinylacetat bestand aus 6,0 g beziehungsweise 300 g;
- die Mischung aus Butylacrylat und Methylmethacrylat bestand aus jeweils 445 g statt 324 g.

Vergleichsbeispiel 7:
kommerziell verfügbare wässrige Dispersion eines Polyvinylalkohol- und Emulgator-stabilisierten Vinylacetat-Ethylen-Copolymers, ohne VeoVa- und Acrylat-Comonomer-Einheiten.

Vergleichsbeispiel 8:
Wie Beispiel 1, wobei in der letzten Stufe noch 32,4 g Methacrylsäure zusammen mit Butylacrylat und Methylmethacrylat dosiert werden.

Vergleichsbeispiel 9:
kommerziell verfügbare wässrige Styrol-Acrylat-Copolymer-Dispersion.

Vergleichsbeispiel 10:
Wie Beispiel 1, mit dem Unterschied, dass die Stufen a) und b) zu in einer einzigen Stufe vereint wurden:
Zur Vorlage mit den Monomeren Vinylacetat, Ethylen und Natriumvinylsulfonat wurden gleichzeitig 1691 g Vinylacetat und 6,5 g Vinyltriethoxysilan dosiert, unter einem Ethylendruck wie für Beispiel 1 beschrieben.

Anschließend wurden 324 g Butylacrylat und 324 g Methylmethacrylat polymerisiert, wie in Beispiel 1 angegeben.

Vergleichsbeispiel 11:
Wie Beispiel 1, mit dem Unterschied, dass in Stufe b) kein Vinyltriethoxysilan eingesetzt und in Stufe c) 6,5 g Vinyltriethoxysilan gemeinsam mit Butylacrylat und Methylmethacrylat zudosiert wurden.

### Beispiel 12:

Wie Beispiel 2, mit dem Unterschied, dass in Stufe c) gemeinsam mit Butylacrylat und Methylmethacrylat zusätzlich 6,5 g Vinyltriethoxysilan zudosiert wurden.

Vergleichsbeispiel 13:
Wie Beispiel 2, mit dem Unterschied, dass die 6,5 g Vinyltriethoxysilan, die 191 g Vinylacetat, die 324 g Butylacrylat sowie die 324 g Methylmethacrylat gleichzeitig zudosiert wurden. Die Stufen b) und c) des Beispiels 2 waren in Vergleichsbeispiel 13 also zu einer einzigen Stufe vereint.

**Tabelle 1: Monomerzusammensetzung der (Vergleichs)Beispiele:**

| Monomer^{a)} | Bsp. 1 | | Bsp. 2 | | Bsp.3 | | Bsp. 4 | |
|---|---|---|---|---|---|---|---|---|
| | [g] | [%] | [g] | [%] | [g] | [%] | [g] | [%] |
| VAM | 1905 | 67,33 | 1743 | 61, 60 | 1602 | 56, 84 | 1943 | 64, 95 |
| E | 270 | 9,54 | 270 | 9,54 | 270 | 9, 58 | 270 | 9,03 |
| Veova10 | 0 | 0,00 | 162 | 5,73 | 296 | 10,50 | 0 | 0,00 |
| Silan | 6,5 | 0,23 | 6,5 | 0,23 | 6,5 | 0,23 | 6,5 | 0,22 |
| BA | 324 | 11,45 | 324 | 11,45 | 322 | 11,42 | 386 | 12,90 |
| MMA | 324 | 11,45 | 324 | 11,45 | 322 | 11,42 | 386 | 12,90 |
| Summe | 2829,5 | 100 | 2829,5 | 100 | 2818,5 | 100 | 2991,5 | 100 |

| | | | | | | | | |
|---|---|---|---|---|---|---|---|---|
| a) VAM: Vinylacetat; E: Ethylen; Veova10: Versaticsäurevinylester; Silan: Vinyltriethoxysilan: BA: Butylacrylat; MMA: Methylmethacrylat; MAS: Methacrylsäure. | | | | | | | | |

**Fortsetzung Tabelle 1:**

| Monomerzusammensetzung der (Vergleichs)Beispiele: | | | | | | | | |
|---|---|---|---|---|---|---|---|---|
| Monomer | Bsp. 5 | | Bsp. 6 | | VBsp.7 | | VBsp. 8 | |
| | [g] | [%] | [g] | [%] | [g] | [%] | [g] | [%] |
| VAM | 1905 | 67,33 | 1600 | 52,67 | 2517 | 89, 9 | 1905 | 66,57 |
| E | 270 | 9,54 | 270 | 8,89 | 274 | 9, 8 | 270 | 9,44 |
| Veova10 | 0 | 0,00 | 272 | 8,95 | 0 | 0 | 0 | 0,00 |
| Silan | 6,5 | 0,23 | 6 | 0,20 | 8 | 0,3 | 6,5 | 0,23 |
| BA | 324 | 11, 45 | 445 | 14,65 | 0 | 0 | 324 | 11,32 |
| MMA | 324 | 11, 45 | 445 | 14, 65 | 0 | 0 | 324 | 11,32 |
| MAS | 0 | 0 | 0 | 0 | 0 | 0 | 32,4 | 1,13 |
| Summe | 3066 | 100 | 3038 | 100 | 2800 | 100 | 2861,5 | 100 |

**Fortsetzung Tabelle 1:**

| Monomerzusammensetzung der (Vergleichs)Beispiele: | | | | | | | | |
|---|---|---|---|---|---|---|---|---|
| Monomer | VBsp. 10 | | VBsp. 11 | | Bsp.12 | | VBsp.13 | |
| | [g] | [%] | [g] | [%] | [g] | [%] | [g] | [%] |
| VAM | 1890 | 61, 64 | 1905 | 67,33 | 1743 | 61,5 | 1743 | 61, 60 |
| E | 270 | 8,81 | 270 | 9,54 | 270 | 9,52 | 270 | 9,54 |
| Veova10 | 0 | 0,00 | 0 | 0,00 | 162 | 5,71 | 162 | 5,73 |
| Silan | 6 | 0,20 | 6,5 | 0,23 | 13 | 0,46 | 6,5 | 0,23 |
| BA | 450 | 14, 68 | 324 | 11,45 | 324 | 11,4 | 324 | 11,45 |
| MMA | 450 | 14, 68 | 324 | 11,45 | 324 | 11,4 | 324 | 11,45 |
| MAS | 0 | 0 | | | | | | |
| Summe | 2829, 5 | 100 | 2829,5 | 100 | 2829, 5 | 100 | 2829, 5 | 100 |

Die Angaben zu den Monomerzusammensetzungen in Tabelle 1 berücksichtigen, dass je 20 Gew.-% des eingesetzten Ethylens nicht einpolymerisiert sondern als Restgas verworfen worden sind.

**Tabelle 2: analytische Daten zu den Polymerdispersionen der (Vergleichs)Beispiele:**

| | Bsp. 1 | Bsp.2 | Bsp.3 | Bsp. 4 | Bsp.5 | Bsp. 6 | VBsp. 7 | VBsp. 8 |
|---|---|---|---|---|---|---|---|---|
| FG* | 54,0 | 52,3 | 53,6 | 54,0 | 54,0 | 53,9 | 55,5 | 58,2 |
| pH* | 4,2 | 5,2 | 5,1 | 4,8 | 5,7 | 4,8 | 4,2 | 4,55 |
| Viskosität* | 290 | 256 | 770 | 820 | 310 | 596 | 1475 | 2080 |
| Tg* | 1 | -0,5 | -0,2 | 2,9 | 2,8 | -0,2 | 6,5 | 6 |
| Dw* | 983 | 1240 | 845 | 984 | 1214 | 1489 | 604 | 745 |
| Dn* | 452 | 398 | 433 | 497 | 576 | 491 | 380 | 412 |
| Dw/Dn* | 2,4 | 3,1 | 1,95 | 1,98 | 2,1 | 3,03 | 1,59 | 1,81 |

| | | | | | | | | |
|---|---|---|---|---|---|---|---|---|
| *: FG: Feststoffgehalt [%]; pH: pH-Wert; Viskosität: [mPas]; Tg: Glasübergangstemperatur [°C]; Dw: gewichtsmittlere Partikeldurchmesser [nm]; Dn: zahlenmittlerem Teilchendurchmesser [nm]; Dw/Dn: Polydispersität PD. | | | | | | | | |

**Fortsetzung Tabelle 2:**

| analytische Daten zu den Polymerdispersionen der (Vergleichs)Beispiele: | | | | | |
|---|---|---|---|---|---|
| | VBsp.10 | VBsp.11 | Bsp.12 | VBsp.13 | |
| FG* | 54,7 | 52,2 | 52,3 | 52,3 | |
| pH* | 4,5 | 5,0 | 4,8 | 4,8 | |
| Viskosität* | 852 | 996 | 652 | 1290 | |
| Tg* | 2,4 | -0,7 | -0, 9 | 0,4 | |
| Dw* | 1863 | 1451 | 1252 | 2014 | |
| Dn* | 431 | 459 | 423 | 432 | |
| Dw/Dn* | 4,32 | 3,16 | 2,96 | 4,66 | |

### Herstellung einer Dispersionsfarbe:

Durch herkömmliches Mischen der im Folgenden angegebenen Rezeptur wurde eine Farbmatrix auf herkömmliche Weise hergestellt. Der pH-Wert der Farbmatrix betrug 11,9.

### Rezeptur der Farbmatrix:

| | |
|---|---|
| 301,5 g | Wasser, |
| 7,6 g | Dispergiermittel, |
| 4,4 g | Entschäumer, |
| 4,3 g | Verdicker, |
| 385,8 g | Füllstoff (CaCO₃), |
| 129,3 g | Titandioxid, |
| 2,0 g | pH Stellmittel, |
| 15,0 g | alkalische Komponente. |

Mischen der Farbmatrix mit der Polymerdispersion des jeweiligen (Vergleichs)Beispiels entsprechend den Angaben in Tabelle 3 ergab matte gebrauchsfertige Innendispersionsfarben. Der Feststoffgehalt der Polymerdispersion des jeweiligen (Vergleichs)-Beispiels wurde zuvor auf 50% eingestellt.

**Tabelle 3: Zusammensetzung der Dispersionsfarben:**

| | Bindemittel-Gehalt der Dispersionsfarbe | |
|---|---|---|
| | 7% Polymer-dispersion | 14% Polymer-dispersion |
| Farbmatrix [g] | 279 | 258 |
| Polymerdispersion (50%ig) [g] | 21 | 42 |
| Dispersionsfarbe [g] | 300 | 300 |

### Austestung der Lagerstabilität der Dispersionsfarben:

Nach Abmischen der Farbmatrix mit der Polymerdispersion wurde der pH-Wert der jeweiligen Dispersionsfarbe bestimmt ("pH Start").

Anschließend wurden die Dispersionsfarben im Trockenschrank bei einer Temperatur von 50°C gelagert. Nach einer Lagerzeit von 14 Tagen wurden die Farben aus dem Trockenschrank entnommen, auf Raumtemperatur abgekühlt und anschließend der pH-Wert bestimmt ("pH 14d/50°C").

Maßgebend zur Beurteilung der pH-Stabilität ist die Differenz ("Delta pH") zwischen dem pH-Wert nach Herstellung ("pH Start") und Lagerung der Dispersionsfarbe ("pH 14d/50°C").

Die Ergebnisse der Austestung sind in folgender Tabelle 4 zusammengefasst.

**Tabelle 4: pH-Stabilität der Dispersionsfarben:**

| Polymerdispersion | Dispersionsfarbe | | | | | |
|---|---|---|---|---|---|---|
| | 7 Gew.-% Polymerdispersion | | | 14 Gew.-% Polymerdispersion | | |
| | pH | | | pH | | |
| | Start* | 14d/50°C* | Delta* | Start* | 14d/50°C* | Delta* |
| Bsp.1 | 11,47 | 10,62 | 0,85 | 11,31 | 10,21 | 1,10 |
| Bsp.2 | 11,42 | 10,96 | 0,46 | 11,21 | 10,60 | 0,61 |
| Bsp.3 | 11,41 | 10,99 | 0,42 | 11,32 | 10,63 | 0,69 |
| Bsp.4 | 11,42 | 11,05 | 0,37 | 11,29 | 10,52 | 0,77 |
| Bsp.5 | 11,40 | 10,98 | 0,42 | 11,30 | 10,70 | 0,60 |
| Bsp.6 | 11,30 | 11,05 | 0,25 | 11,18 | 10, 65 | 0,53 |
| VBsp.7 | 11,30 | 9,90 | 1,40 | 11,20 | 9,40 | 1,80 |
| VBsp.8 | 11,41 | 11,01 | 0,40 | 11,31 | 10,68 | 0,63 |
| VBsp.9 | 11,40 | 10,84 | 0,56 | 11,21 | 10,64 | 0,57 |

| | | | | | | |
|---|---|---|---|---|---|---|
| *: Start: pH-Wert der Dispersionsfarbe nach ihrer Herstellung; 14d/50°C: pH-Wert der Dispersionsfarbe nach Lagerung für 14 Tage bei 50°C; Delta: Differenz der pH-Werte von "Start" und "14d/50°C". | | | | | | |

Die Dispersionsfarben mit erfindungsgemäßen Polymerdispersionen wiesen nach Lagerung allesamt pH-Werte oberhalb 10 auf. Dies ist die Voraussetzung zur Herstellung von konservierungsmittelfreien Dispersionsfarben, da unter diesen Bedingungen das Wachstum von Mikroorganismen in der Farbe stark unterdrückt ist.

Dagegen war im Falle der nicht erfindungsgemäßen Dispersionsfarbe mit der VAE-Polymerdispersion von Vergleichsbeispiel 7 der pH-Wert bereits nach 2 Wochen Lagerung unter einen pH-Wert von 10 abgesunken.

Überraschenderweise ist die pH-Stabilität der erfindungsgemäßen Dispersionsfarben trotz ihres Vinylacetat-Anteils vergleichbar oder sogar noch besser als im Falle der Dispersionsfarbe mit der Acrylat-Polymerdispersion des Vergleichsbeispiels 9 als Bindemittel.

Dies bedeutet, dass durch die erfindungsgemäße Mehrstufenpolymerisation die gewünschte pH-Stabilität von Vinylacetat-Copolymeren erreicht wird.

### Austestung der Deckkraft der Dispersionsfarben:

Die Deckkraft wurde mit der in der "Richtlinie zur Bestimmung des Deckvermögens" des Verbandes der deutschen Lackindustrie, Ausgabe Juli 2002, beschriebenen Methode gemäß DIN EN 13300 ermittelt.

Die jeweilige Dispersionsfarbe wurde mit einem automatischen Filmapplikator, mit einer Rakel mit einer Spalthöhe von 150 µm und 225 µm, jeweils auf schwarz-weißen Kontrastkarten (Typ 3H der Firma Leneta) mit Normfarbwert Y über Schwarz von 7 oder weniger und Normfarbwert Y über Weiß von 80 bis 90, aufgebracht. Die so beschichteten Kontrastkarten wurden 24 Stunden bei 23°C und 50% relativer Luftfeuchtigkeit getrocknet und anschließend gewogen.

Aus der Auftragsmenge in g/m² und der Farbdichte wurde jeweils die Ergiebigkeit in m²/l berechnet.

Mit einem Colorimeter (Elrepho 450X von Datacolor) wurden die Normfarbwerte Y (Farbstandards) über der schwarzen und der weißen Basis gemessen und das "Kontrastverhältnis" in Prozent berechnet.

Die so ermittelten Werte für das Kontrastverhältnis wurden in einem Diagramm gegen die entsprechende Ergiebigkeit (m²/l) aufgetragen. Durch Interpolation wurde das Kontrastverhältnis bei 6, 7 und 8 m²/l bestimmt.

Das Deckvermögen der Farben wurde mit der Variante von 14% Bindemitteleinsatzmenge untersucht.

Die Ergebnisse der Austestung sind in Tabelle 5 zusammengefasst.

**Tabelle 5: Deckvermögen der Dispersionsfarben:**

| | 6 m²/L | 7 m²/L | 8 m²/L |
|---|---|---|---|
| Bsp.1 | 99,2 | 98,9 | 98,6 |
| Bsp.2 | 99,1 | 98,8 | 98,4 |
| Bsp.3 | 99,1 | 98,7 | 98,3 |
| Bsp.4 | 99,2 | 98,8 | 98,4 |
| Bsp.5 | 99,1 | 98,8 | 98,4 |
| Bsp.6 | 99,2 | 98,9 | 98,6 |
| VBsp.7 | 99,0 | 98,6 | 98,2 |
| VBsp.8 | 99,2 | 98,8 | 98,4 |
| VBsp.9 | 98,6 | 98,0 | 97,4 |

Das Pigmentbindevermögen beziehungsweise das Deckvermögen von Dispersionsfarben mit Vinylacetat-Copolymeren als Bindemittel ist bekanntermaßen größer als bei entsprechenden Dispersionsfarben mit Acrylat-Copolymeren als Bindemittel, wie eingangs diskutiert und mit Vergleichsbeispiel 7 (Vinylacetat-Copolymer) und Vergleichsbeispiel 9 (Acrylat-Copolymer) gezeigt. Überraschenderweise zeigen die Dispersionsfarben mit erfindungsgemäßen Copolymeren trotz ihres Acrylat-Anteils ein besseres Deckvermögen als die Dispersionsfarbe des Vergleichsbeispiel 7, die ein Vinylacetat-Copolymer ohne Acrylat-Anteil als Bindemittel enthielt.

Dies bedeutet, dass durch die erfindungsgemäße Mehrstufenpolymerisation das Deckvermögen von Acrylat-Einheiten enthaltenden Bindemitteln gesteigert wird.

Neben dem verbesserten Deckvermögen zeigen die erfindungsgemäßen Dispersionsfarben zudem zugleich trotz ihres Vinylacetat-Anteils die geforderte Stabilität bei hohen pH-Werten und machen somit biozidfreie Dispersionsfarben möglich.

Die erfindungsgemäßen Bindemittel zeigen eine vergleichbare Stabilität des pH-Wertes in der Farbe bei der Lagerung wie die marktgängigen Styrol-Acrylat-Dispersionen und gleichzeitig verbesserte Eigenschaften in Bezug auf das Deckervermögen, wodurch eine effizientere Nutzung von Weiß- oder Farbpigmenten erzielt werden kann.

### Austestung der Scheuerfestigkeit SF (Nassabriebsfestigkeit) der Dispersionsfarben:

Die Bestimmung der Nassabriebsfestigkeit erfolgte nach der Vliesmethode entsprechend ISO 11998. Hierzu wurde die jeweilige Dispersionsfarbe mit einem Applikator in einer Schichtdicke von 300 µm (nass) auf eine Leneta-Folie (PVC-Folie) aufgetragen. Es kamen die oben beschriebenen Dispersionsfarben mit je 14 Gew.-% Polymerdispersion zum Einsatz.

Anschließend wurde 72 Stunden bei Normklima (DIN 50014, 23°C und 50% relative Luftfeuchtigkeit) gelagert, dann 24 Stunden bei 50°C und schließlich 24 Stunden bei Normklima gelagert.

Es resultierte eine Trockenschichtstärke von 200 µm.

Dann wurden jeweils drei Teststreifen mit den Abmessungen 2,5 cm x 7,5 cm ausgeschnitten und anschließend gewogen.

Die Teststreifen wurden einer Scheuerprüfung mit 200 Zyklen mit dem Scheuervlies (3M Scotch-Brite^{®}, Handpad 7448, grau, Type S UFN) unterzogen und anschließend wieder gewogen. Aus der Farbdichte der gescheuerten Fläche und dem Massenverlust des Farbfilms wurde dann der Farbabtrag in µm errechnet.

Ein niedrigerer Farbabtrag steht für eine höhere Nassabriebsfestigkeit.

Es wurde jeweils ein Mittelwert aus drei Messungen ermittelt. Die Ergebnisse der Austestung sind in folgender Tabelle 6 zusammengefasst.

Aus der Tabelle 6 geht hervor, dass die Dispersionsfarben mit den Polymerdispersionen von Beispiel 1 beziehungsweise Beispiel 2 als Bindemittel erheblich höhere Nassabriebsfestigkeiten aufwiesen als die entsprechenden Dispersionsfarben mit den Polymerdispersionen des Vergleichsbeispiels 8 (zusätzlich Säure in Stufe c) copolymerisiert) beziehungsweise des Vergleichsbeispiels 10 (Polymerisationsstufen a) und b) zu einer Stufe zusammengefasst), des Vergleichsbeispiels 11 (Silan in Stufe c), nicht aber in Stufe b) polymerisiert) oder des Vergleichsbeispiels 13 (Polymerisationsstufen b) und c) zu einer Stufe zusammengefasst). Eine besonders hohe Nassabriebsfestigkeit wurde mit der Polymerdispersion des Beispiels 12 (Silan in Stufe b) und zudem in Stufe c) polymerisiert) erhalten.

**Tabelle 6: Nassabriebsfestigkeit der Dispersionsfarben mit den Polymerdispersionen der (Vergleichs)Beispiele 1, 8 und 10 als Bindemittel:**

| Polymerdispersion | Nassabrieb [µm] |
|---|---|
| Beispiel 1 | 32 |
| Vergleichsbeispiel 8 | 48 |
| Vergleichsbeispiel 10 | 36 |
| Vergleichsbeispiel 11 | 34 |
| Beispiel 2 | 31 |
| Beispiel 12 | 20 |
| Vergleichsbeispiel 13 | 37 |

## Patentansprüche

1. Verfahren zur Herstellung von Mehrstufen-Copolymeren in Form von wässrigen Dispersionen durch mehrstufige, radikalisch initiierte Emulsionspolymerisation, **dadurch gekennzeichnet, dass**
a) in einer ersten Stufe 20 bis 75 Gew.-% Vinylacetat, gegebenenfalls Ethylen und gegebenenfalls ein oder mehrere weitere ethylenisch ungesättigte Monomere polymerisiert werden,
b) in einer zweiten Stufe in Gegenwart des Polymers aus der ersten Stufe a) 1 bis 25 Gew.-% Vinylacetat, 0,01 bis 2 Gew.-% an einem oder mehreren ethylenisch ungesättigten siliciumfunktionellen Monomeren und gegebenenfalls ein oder mehrere weitere ethylenisch ungesättigte Monomere polymerisiert werden und
c) in einer dritten Stufe in Gegenwart des Polymers aus der zweiten Stufe b) 5 bis 40 Gew.-% an einem oder mehreren Monomeren ausgewählt aus der Gruppe umfassend Ester der Acrylsäure, Ester der Methacrylsäure und Vinylaromaten und gegebenenfalls ein oder mehrere weitere ethylenisch ungesättigte Monomere polymerisiert werden,
mit der Maßgabe, dass in der dritten Stufe c) keine ethylenisch ungesättigte Carbonsäure polymerisiert wird,
wobei sich die Angaben in Gew.-% auf das Gesamtgewicht der insgesamt in den Stufen a) bis c) eingesetzten Monomere beziehen.

2. Verfahren zur Herstellung von Mehrstufen-Copolymeren in Form von wässrigen Dispersionen gemäß Anspruch 1, **dadurch gekennzeichnet, dass** in der ersten Stufe a) ≥ 40 Gew.-% Vinylacetat polymerisiert werden, bezogen auf das Gesamtgewicht der Monomere der Stufe a).

3. Verfahren zur Herstellung von Mehrstufen-Copolymeren in Form von wässrigen Dispersionen gemäß Anspruch 1 oder 2, **dadurch gekennzeichnet, dass** in der ersten Stufe a) 1 bis 40 Gew.-% Ethylen polymerisiert werden, bezogen auf das Gesamtgewicht der insgesamt in den Stufen a) bis c) eingesetzten Monomere.

4. Verfahren zur Herstellung von Mehrstufen-Copolymeren in Form von wässrigen Dispersionen gemäß Anspruch 1 bis 3, **dadurch gekennzeichnet, dass** in der ersten Stufe a) 1 bis 30 Gew.-% Ethylen polymerisiert werden, bezogen auf das Gesamtgewicht der Monomere der Stufe a).

5. Verfahren zur Herstellung von Mehrstufen-Copolymeren in Form von wässrigen Dispersionen gemäß Anspruch 1 bis 4, **dadurch gekennzeichnet, dass** in der ersten Stufe a) 0,1 bis 25 Gew.-% Vinylester von unverzweigten oder verzweigten Carbonsäuren mit 3 bis 18 C-Atomen polymerisiert werden, bezogen auf das Gesamtgewicht der insgesamt in den Stufen a) bis c) eingesetzten Monomere.

6. Verfahren zur Herstellung von Mehrstufen-Copolymeren in Form von wässrigen Dispersionen gemäß Anspruch 1 bis 5, **dadurch gekennzeichnet, dass** in der ersten Stufe a) 0,01 bis 2 Gew.-% ethylenisch ungesättigte Säuren polymerisiert werden, bezogen auf das Gesamtgewicht der insgesamt in den Stufen a) bis c) eingesetzten Monomere.

7. Verfahren zur Herstellung von Mehrstufen-Copolymeren in Form von wässrigen Dispersionen gemäß Anspruch 1 bis 6, **dadurch gekennzeichnet, dass** in der ersten Stufe a) keine Ester der Acrylsäure, keine Ester der Methacrylsäure und keine Vinylaromaten copolymerisiert werden.

8. Verfahren zur Herstellung von Mehrstufen-Copolymeren in Form von wässrigen Dispersionen gemäß Anspruch 1 bis 7, **dadurch gekennzeichnet, dass** in der zweiten Stufe b) 40 bis 99,9 Gew.-% Vinylacetat polymerisiert werden, bezogen auf das Gesamtgewicht der Monomere der Stufe b).

9. Verfahren zur Herstellung von Mehrstufen-Copolymeren in Form von wässrigen Dispersionen gemäß Anspruch 1 bis 8, **dadurch gekennzeichnet, dass** ein oder mehrere ethylenisch ungesättigte siliciumfunktionelle Monomere der zweiten Stufe b) Siliciumverbindungen der allgemeinen Formel R¹SiR²₀₋₂(OR³)₁₋₃ sind, wobei R¹ die Bedeutung CH₂=CR⁴-(CH₂)₀₋₁ oder CH₂=CR⁴CO₂(CH₂)₁₋₃ hat, R² die Bedeutung C₁- bis C₃-Alkylrest, C₁- bis C₃-Alkoxyrest oder Halogen hat, R³ ein unverzweigter oder verzweigter, gegebenenfalls substituierter Alkylrest mit 1 bis 12 C-Atomen oder ein Acylrest mit 2 bis 12 C-Atomen ist, wobei R³ gegebenenfalls durch eine Ethergruppe unterbrochen sein kann, und R⁴ für H oder CH₃ steht; und/oder ein oder mehrere ethylenisch ungesättigte siliciumfunktionelle Monomere der zweiten Stufe b) (Meth)acrylamide der allgemeinen Formel CH₂=CR⁵-CO-NR⁶-R⁷-SiR⁸ₙ-(R⁹)₃₋ₘ sind, wobei n= 0 bis 4, m= 0 bis 2, R⁵ entweder H oder eine Methyl-Gruppe ist, R⁶ H ist oder eine Alkyl-Gruppe mit 1 bis 5 C-Atomen ist; R⁷ eine Alkylen-Gruppe mit 1 bis 5 C-Atomen oder eine bivalente organische Gruppe, in welcher die Kohlenstoffkette durch ein O- oder N-Atom unterbrochen wird, ist, R⁸ eine Alkyl-Gruppe mit 1 bis 5 C-Atomen ist, R⁹ eine Alkoxy-Gruppe mit 1 bis 40 C-Atomen ist, welche mit weiteren Heterocyclen substituiert sein können.

10. Verfahren zur Herstellung von Mehrstufen-Copolymeren in Form von wässrigen Dispersionen gemäß Anspruch 1 bis 9, **dadurch gekennzeichnet, dass** in der zweiten Stufe b) 0,1 bis 20 Gew.-% ethylenisch ungesättigte siliciumfunktionelle Monomere polymerisiert werden, bezogen auf das Gesamtgewicht der Monomere der Stufe b).

11. Verfahren zur Herstellung von Mehrstufen-Copolymeren in Form von wässrigen Dispersionen gemäß Anspruch 1 bis 10, **dadurch gekennzeichnet, dass** in der zweiten Stufe b) keine ethylenisch ungesättigte Säuren, keine Ester der Acrylsäure, keine Ester der Methacrylsäure und keine Vinylaromaten copolymerisiert werden.

12. Verfahren zur Herstellung von Mehrstufen-Copolymeren in Form von wässrigen Dispersionen gemäß Anspruch 1 bis 11, **dadurch gekennzeichnet, dass** in der dritten Stufe c) 70 bis 100 Gew.-% an einem oder mehreren Monomeren ausgewählt aus der Gruppe umfassend Ester der (Meth)Acrylsäure und Vinylaromaten polymerisiert werden, bezogen auf das Gesamtgewicht der Monomere der Stufe c).

13. Verfahren zur Herstellung von Mehrstufen-Copolymeren in Form von wässrigen Dispersionen gemäß Anspruch 1 bis 12, **dadurch gekennzeichnet, dass** in der dritten Stufe c) 0,01 bis 2 Gew.-% ethylenisch ungesättigte siliciumfunktionelle Monomere polymerisiert werden, bezogen auf das Gesamtgewicht der insgesamt in den Stufen a) bis c) eingesetzten Monomere.

14. Mehrstufen-Copolymere in Form von wässrigen Dispersionen erhältlich nach dem mehrstufigen, radikalisch initiierten Emulsionspolymerisationsverfahren von Anspruch 1 bis 13.

15. Mehrstufen-Copolymere in Form von wässrigen Dispersionen nach Anspruch 14, **dadurch gekennzeichnet, dass** die Mehrstufen-Copolymere durch ein oder mehrere Schutzkolloide, ein oder mehrere nichtionische Emulgatoren und ein oder mehrere anionische Emulgatoren stabilisiert sind.

16. Mehrstufen-Copolymere in Form von wässrigen Dispersionen nach Anspruch 14 oder 15, **dadurch gekennzeichnet, dass** die Mehrstufen-Copolymere gewichtsmittlere Partikeldurchmesser Dw zwischen 200 und 3000 nm haben.

17. Mehrstufen-Copolymere in Form von wässrigen Dispersionen nach Anspruch 14 bis 16, **dadurch gekennzeichnet, dass** die Mehrstufen-Copolymere eine Polydispersität PD von ≤ 3,5 haben.

18. Verwendung der Mehrstufen-Copolymere in Form von wässrigen Dispersionen aus Anspruch 14 bis 17 als Bindemittel für Beschichtungsmittel, wie Dispersionsfarben oder Putze.

19. Verwendung der Mehrstufen-Copolymere in Form von wässrigen Dispersionen aus Anspruch 14 bis 17 als Bindemittel für Dispersionsfarben oder Putze mit pH-Werten von 10 bis 11,5.

## Claims

1. A process for preparing multistage copolymers in the form of aqueous dispersions by multistage, radically initiated emulsion polymerization, **characterized in that**
a) in a first stage, 20% to 75% by weight of vinyl acetate, optionally ethylene and optionally one or more further ethylenically unsaturated monomers are polymerized,
b) in a second stage, in the presence of the polymer from the first stage a), 1% to 25% by weight of vinyl acetate, 0.01% to 2% by weight of one or more ethylenically unsaturated silicon-functional monomers and optionally one or more further ethylenically unsaturated monomers are polymerized, and
c) in a third stage, in the presence of the polymer from the second stage b), 5% to 40% by weight of one or more monomers selected from the group encompassing esters of acrylic acid, esters of methacrylic acid and vinyl aromatics and optionally one or more further ethylenically unsaturated monomers are polymerized,
with the proviso that in the third stage c), no ethylenically unsaturated carboxylic acid is polymerized,
where the figures in % by weight are based on the total weight of the monomers used overall in stages a) to c).

2. The process for preparing multistage copolymers in the form of aqueous dispersions as claimed in claim 1, **characterized in that** in the first stage a), ≥ 40% by weight of vinyl acetate are polymerized, based on the total weight of the monomers of stage a).

3. The process for preparing multistage copolymers in the form of aqueous dispersions as claimed in claim 1 or 2, **characterized in that** in the first stage a), 1% to 40% by weight of ethylene are polymerized, based on the total weight of the monomers used overall in stages a) to c).

4. The process for preparing multistage copolymers in the form of aqueous dispersions as claimed in claim 1 to 3, **characterized in that** in the first stage a), 1% to 30% by weight of ethylene are polymerized, based on the total weight of the monomers of stage a).

5. The process for preparing multistage copolymers in the form of aqueous dispersions as claimed in claim 1 to 4, **characterized in that** in the first stage a), 0.1% to 25% by weight of vinyl esters of unbranched or branched carboxylic acids having 3 to 18 carbon atoms are polymerized, based on the total weight of the monomers used overall in stages a) to c).

6. The process for preparing multistage copolymers in the form of aqueous dispersions as claimed in claim 1 to 5, **characterized in that** in the first stage a), 0.01% to 2% by weight of ethylenically unsaturated acids are polymerized, based on the total weight of the monomers used overall in stages a) to c).

7. The process for preparing multistage copolymers in the form of aqueous dispersions as claimed in claim 1 to 6, **characterized in that** in the first stage a), no esters of acrylic acid, no esters of methacrylic acid and no vinyl aromatics are copolymerized.

8. The process for preparing multistage copolymers in the form of aqueous dispersions as claimed in claim 1 to 7, **characterized in that** in the second stage b), 40% to 99.9% by weight of vinyl acetate are polymerized, based on the total weight of the monomers of stage b).

9. The process for preparing multistage copolymers in the form of aqueous dispersions as claimed in claim 1 to 8, **characterized in that** one or more ethylenically unsaturated silicon-functional monomers of the second stage b) are silicon compounds of the general formula R¹SiR²₀₋₂(OR³)₁₋₃, where R¹ has the meaning CH₂=CR⁴-(CH₂)₀₋₁ or CH₂=CR⁴CO₂(CH₂)₁₋₃, R² has the meaning C₁ to C₃ alkyl radical, C₁ to C₃ alkoxy radical or halogen, R³ is an unbranched or branched, optionally substituted alkyl radical having 1 to 12 carbon atoms or an acyl radical having 2 to 12 carbon atoms, where R³ may optionally be interrupted by an ether group, and R⁴ is H or CH₃; and/or one or more ethylenically unsaturated silicon-functional monomers of the second stage b) are (meth)acrylamides of the general formula CH₂=CR⁵-CO-NR⁶-R⁷-SiR⁸ₙ-(R⁹)₃₋ₘ, where n = 0 to 4, m = 0 to 2, R⁵ is either H or a methyl group, R⁶ is H or an alkyl group having 1 to 5 carbon atoms, R⁷ is an alkylene group having 1 to 5 carbon atoms or is a divalent organic group in which the carbon chain is interrupted by an O or N atom, R⁸ is an alkyl group having 1 to 5 carbon atoms, and R⁹ is an alkoxy group having 1 to 40 carbon atoms which may be substituted by further heterocycles.

10. The process for preparing multistage copolymers in the form of aqueous dispersions as claimed in claim 1 to 9, **characterized in that** in the second stage b), 0.1% to 20% by weight of ethylenically unsaturated silicon-functional monomers are polymerized, based on the total weight of the monomers of stage b).

11. The process for preparing multistage copolymers in the form of aqueous dispersions as claimed in claim 1 to 10, **characterized in that** in the second stage b), no ethylenically unsaturated acids, no esters of acrylic acid, no esters of methacrylic acid and no vinyl aromatics are copolymerized.

12. The process for preparing multistage copolymers in the form of aqueous dispersions as claimed in claim 1 to 11, **characterized in that** in the third stage c), 70% to 100% by weight of one or more monomers selected from the group encompassing esters of (meth)acrylic acid and vinyl aromatics are polymerized, based on the total weight of the monomers of stage c).

13. The process for preparing multistage copolymers in the form of aqueous dispersions as claimed in claim 1 to 12, **characterized in that** in the third stage c), 0.01% to 2% by weight of ethylenically unsaturated silicon-functional monomers are polymerized, based on the total weight of the monomers used overall in stages a) to c).

14. A multistage copolymer in the form of an aqueous dispersion obtainable by the multistage, radically initiated emulsion polymerization process of claim 1 to 13.

15. The multistage copolymer in the form of an aqueous dispersion as claimed in claim 14, **characterized in that** the multistage copolymer is stabilized by one or more protective colloids, one or more nonionic emulsifiers and one or more anionic emulsifiers.

16. The multistage copolymer in the form of an aqueous dispersion as claimed in claim 14 or 15, **characterized in that** the multistage copolymer has a weight-average particle diameter Dw of between 200 and 3000 nm.

17. The multistage copolymer in the form of an aqueous dispersion as claimed in claim 14 to 16, **characterized in that** the multistage copolymer has a polydispersity PD of ≤ 3.5.

18. The use of the multistage copolymer in the form of an aqueous dispersion from claim 14 to 17 as a binder for coating materials, such as emulsion paints or renders.

19. The use of the multistage copolymer in the form of an aqueous dispersion from claim 14 to 17 as a binder for emulsion paints or renders with pH levels of 10 to 11.5.

## Revendications

1. Procédé de préparation de copolymères à plusieurs étages sous forme de dispersions aqueuses par une polymérisation en émulsion à plusieurs étapes, initiée par voie radicalaire, **caractérisé en ce que**
a) dans une première étape, 20 à 75% en poids d'acétate de vinyle, le cas échéant de l'éthylène et le cas échéant un ou plusieurs autres monomères éthyléniquement insaturés sont polymérisés,
b) dans une deuxième étape, en présence du polymère de la première étape a), 1 à 25% en poids d'acétate de vinyle, 0,01 à 2% en poids d'un ou de plusieurs monomères éthyléniquement insaturés à fonctionnalité silicium et le cas échéant un ou plusieurs autres monomères éthyléniquement insaturés sont polymérisés et
c) dans une troisième étape, en présence du polymère de la deuxième étape b), 5 à 40% en poids d'un ou de plusieurs monomères choisis dans le groupe comprenant les esters de l'acide acrylique, les esters de l'acide méthacrylique et les aromatiques de vinyle et le cas échéant un ou plusieurs autres monomères éthyléniquement insaturés sont polymérisés,
étant entendu que dans la troisième étape c), aucun acide carboxylique éthyléniquement insaturé n'est polymérisé, les indications en % en poids se rapportant au poids total des monomères utilisés au total dans les étapes a) à c).

2. Procédé de préparation de copolymères à plusieurs étages sous forme de dispersions aqueuses selon la revendication 1, **caractérisé en ce que** dans la première étape a), ≥ 40% en poids d'acétate de vinyle sont polymérisés, par rapport au poids total des monomères de l'étape a).

3. Procédé de préparation de copolymères à plusieurs étages sous forme de dispersions aqueuses selon la revendication 1 ou 2, **caractérisé en ce que** dans la première étape a), 1 à 40% en poids d'éthylène sont polymérisés, par rapport au poids total des monomères utilisés au total dans les étapes a) à c).

4. Procédé de préparation de copolymères à plusieurs étages sous forme de dispersions aqueuses selon la revendication 1 à 3, **caractérisé en ce que** dans la première étape a), 1 à 30% en poids d'éthylène sont polymérisés, par rapport au poids total des monomères de l'étape a).

5. Procédé de préparation de copolymères à plusieurs étages sous forme de dispersions aqueuses selon la revendication 1 à 4, **caractérisé en ce que** dans la première étape a), 0,1 à 25% en poids d'esters de vinyle d'acides carboxyliques non ramifiés ou ramifiés comprenant 3 à 18 atomes de carbone sont polymérisés, par rapport au poids total des monomères utilisés au total dans les étapes a) à c).

6. Procédé de préparation de copolymères à plusieurs étages sous forme de dispersions aqueuses selon la revendication 1 ou 5, **caractérisé en ce que** dans la première étape a), 0,01 à 2% en poids d'acides éthyléniquement insaturés sont polymérisés, par rapport au poids total des monomères utilisés au total dans les étapes a) à c).

7. Procédé de préparation de copolymères à plusieurs étages sous forme de dispersions aqueuses selon la revendication 1 à 6, **caractérisé en ce que** dans la première étape a), aucun ester de l'acide acrylique, aucun ester de l'acide méthacrylique et aucun aromatique de vinyle n'est copolymérisé.

8. Procédé de préparation de copolymères à plusieurs étages sous forme de dispersions aqueuses selon la revendication 1 à 7, **caractérisé en ce que** dans la deuxième étape b), 40 à 99,9% en poids d'acétate de vinyle sont polymérisés, par rapport au poids total des monomères de l'étape b).

9. Procédé de préparation de copolymères à plusieurs étages sous forme de dispersions aqueuses selon la revendication 1 à 8, **caractérisé en ce qu'**un ou plusieurs monomères éthyléniquement insaturés, à fonctionnalité silicium de la deuxième étape b) sont des composés siliciés de formule générale R¹SiR²₀₋₂(OR³)₁₋₃, dans laquelle R¹ signifie CH₂=CR⁴-(CH₂)₀₋₁ ou CH₂=CR⁴CO₂ (CH₂)₁₋₃, R² signifie radical C₁-C₃-alkyle, radical C₁-C₃-alcoxy ou halogène, R³ représente un radical alkyle non ramifié ou ramifié, le cas échéant substitué, comprenant 1 à 12 atomes de carbone ou un radical acyle comprenant 2 à 12 atomes de carbone, R³ pouvant le cas échéant être interrompu par un groupe éther et R⁴ représentant H ou CH₃ ; et/ou un ou plusieurs monomères éthyléniquement insaturés à fonctionnalité silicium de la deuxième étape b) sont des (méth) acrylamides de formule générale CH₂=CR⁵-CO-NR⁶-R⁷-SiR⁸ₙ-(R⁹)₃₋ₘ, dans laquelle n= 0 à 4, m= 0 à 2, R⁵ représente soit H soit un groupe méthyle, R⁶ représente H ou un groupe alkyle comprenant 1 à 5 atomes de carbone ; R⁷ représente un groupe alkylène comprenant 1 à 5 atomes de carbone ou un groupe organique bivalent, dans lequel la chaîne carbonée est interrompue par un atome de O ou de N, R⁸ représente un groupe alkyle comprenant 1 à 5 atomes de carbone, R⁹ représente un groupe alcoxy comprenant 1 à 40 atomes de carbone, qui peuvent être substitués par d'autres hétérocycles.

10. Procédé de préparation de copolymères à plusieurs étages sous forme de dispersions aqueuses selon la revendication 1 à 9, **caractérisé en ce que** dans la deuxième étape b), 0,1 à 20% en poids de monomères éthyléniquement insaturés à fonctionnalité silicium sont polymérisés, par rapport au poids total des monomères de l'étape b).

11. Procédé de préparation de copolymères à plusieurs étages sous forme de dispersions aqueuses selon la revendication 1 à 10, **caractérisé en ce que** dans la deuxième étape b), aucun acide éthyléniquement insaturé, aucun ester de l'acide acrylique, aucun ester de l'acide méthacrylique et aucun aromatique de vinyle n'est copolymérisé.

12. Procédé de préparation de copolymères à plusieurs étages sous forme de dispersions aqueuses selon la revendication 1 à 11, **caractérisé en ce que** dans la troisième étape c), 70 à 100% en poids d'un ou de plusieurs monomères choisis dans le groupe comprenant les esters de l'acide (méth)acrylique et les aromatiques de vinyle sont polymérisés, par rapport au poids total des monomères de l'étape c).

13. Procédé de préparation de copolymères à plusieurs étages sous forme de dispersions aqueuses selon la revendication 1 ou 12, **caractérisé en ce que** dans la troisième étape c), 0,01 à 2% en poids de monomères éthyléniquement insaturés à fonctionnalité silicium sont polymérisés, par rapport au poids total des monomères utilisés au total dans les étapes a) à c).

14. Copolymères à plusieurs étages sous forme de dispersions aqueuses pouvant être obtenus par le procédé de polymérisation en émulsion à plusieurs étapes, initié par voie radicalaire selon la revendication 1 à 13.

15. Copolymères à plusieurs étages sous forme de dispersions aqueuses selon la revendication 14, **caractérisés en ce que** les copolymères à plusieurs étages sont stabilisés par un ou plusieurs colloïdes de protection, un ou plusieurs émulsifiants non ioniques et un ou plusieurs émulsifiants anioniques.

16. Copolymères à plusieurs étages sous forme de dispersions aqueuses selon la revendication 14 ou 15, **caractérisés en ce que** les copolymères à plusieurs étages présentent un diamètre de particule moyen en poids Dw entre 200 et 3000 nm.

17. Copolymères à plusieurs étages sous forme de dispersions aqueuses selon la revendication 14 à 16, **caractérisés en ce que** les copolymères à plusieurs étages présentent une polydispersité PD ≤ 3,5.

18. Utilisation des copolymères à plusieurs étages sous forme de dispersions aqueuses selon la revendication 14 à 17 comme liant pour des agents de revêtement, tels que des peintures en dispersion ou des enduits.

19. Utilisation des copolymères à plusieurs étages sous forme de dispersions aqueuses selon la revendication 14 à 17 comme liant pour des peintures en dispersion ou des enduits présentant des valeurs de pH de 10 à 11,5.
